(19)

**Europäisches Patentamt**
**European Patent Office**
**Office européen des brevets**

(11) **EP 4 764 979 A1**

(12) **EUROPEAN PATENT APPLICATION**

(43) Date of publication:
24.06.2026 Bulletin 2026/26

(51) International Patent Classification (IPC):
*G06N 10/70* (2022.01)    *G06N 10/20* (2022.01)

(21) Application number: 25223065.1

(22) Date of filing: 12.12.2025

(52) Cooperative Patent Classification (CPC):
G06N 10/70; G06N 10/20

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 20.12.2024 FI 20246514
05.08.2025 FI 20255487

(71) Applicant: IQM Finland Oy
02150 Espoo (FI)

(72) Inventor: HOSSEINKHANI, Amin
80992 Munich (DE)

(74) Representative: Leinweber & Zimmermann
Patentanwalts-PartG mbB
European Patent Attorneys
Viktualienmarkt 8
80331 München (DE)

(54) **METHOD FOR MITIGATING ERRORS CAUSED BY NOISE IN A TARGET QUANTUM CIRCUIT EXECUTED BY A QUANTUM PROCESSOR, COMPUTER PROGRAM PRODUCT, DATA CARRIER AND COMPUTING SYSTEM**

(57) The present invention is related to a method for mitigating errors caused by noise in a target quantum circuit executed by a quantum processor, to a computer program product and a computing system for carrying out the method and to a data carrier having stored thereon the computer program.

**S1** — **Data step**
Receive target and auxiliary sets and noise-free auxiliary value

**S2** — **Noise-reduction step**
Derive for each noise strength value $\lambda_m$ a control parameter dependent noise-reduced target estimator value which is linear in the control parameter

**S3** — **Control parameter step**
Select an expansion value $\lambda_{m_e}$ among the plurality of noise-strenght values and determine the value of the optimal control parameter $n_{op}$, such that in the zero-noise limit a K-th Taylor polynomial of the noise-reduced target estimator value about $\lambda_{m_e}$ is equal to the noise-reduced target estimator value associated with $\lambda_{m_e}$

**S4** — **Inference step**
Determine the first error-mitigated target estimator value as the noise-reduced target estimator value for the optimal control parameter value and the expansion value

**Fig. 2**

EP 4 764 979 A1

**Description**

The invention is related to a method for mitigating errors caused by noise in a target quantum circuit executed by a quantum processor, to a computer program product and a computing system for carrying out the method and to a data carrier having stored thereon the computer program.

In recent years significant progress has been made in improving qubit coherence and increasing qubit counts across various quantum computing platforms. However, the pursuit of achieving fault-tolerant quantum computation through quantum error correction remains a challenge. In the quest for gaining quantum advantage in the Noisy Intermediate Scale Quantum (NISQ) processor domain, the development of quantum error mitigation techniques has garnered significant interest in recent years, see e.g. S. Endo et.al, "Hybrid quantum-classical algorithms and quantum error mitigation", Journal of the Physical Society of Japan 90, 032001 (2021), Z. Cai et.al, "Quantum error mitigation", (2023), arXiv: 2210.00921, Y. Quek et.al, "Exponentially tighter bounds on limitations of quantum error mitigation", (2023), arXiv: 2210.11505. The general idea here is to devise strategies for understanding and compensating for the effects of hardware noise on the outcomes of quantum algorithm executions, particularly those used to estimate mean values/expectation values.

Numerous error mitigation techniques (for mean value estimation) have emerged in the past, and they can be broadly categorized into two distinct branches: noise-agnostic and noise-aware methods. In the noise-aware category, and particularly for Probabilistic Error Mitigation (PEC), a precise model of the underlying hardware noise is essential to effectively neutralize its impact; see e.g. K. Temme et.al, "Error mitigation for short-depth quantum circuits," Phys. Rev. Lett. 119, 180509 (2017), S. Endo et.al, "Practical quantum error mitigation for near-future applications", Phys. Rev. X8, 031027 (2018), C. Song et.al, "Quantum computation with universal error mitigation on a superconducting quantum processor," Science Advances 5, eaaw5686 (2019). While capable of entirely removing the noise's impact on the expectation value, PEC comes at the cost of an exponential sampling overhead. In addition, and despite good progress in achieving scalable error characterization techniques (see e.g. E. van den Berg et.al, "Probabilistic error cancellation with sparse Pauli-Lindblad models on noisy quantum processors", Nature Physics 19, 1116-1121 (2023)), it is crucial to recognize that achieving a perfectly accurate noise model (including spatially and temporally correlated errors) might practically be an impossible task, particularly when dealing with more than just few qubits.

Noise-agnostic error mitigation is the other distinct branch in which having a noise model for the quantum hardware is not required, and it is generally known to have smaller sampling overhead compared with PEC (still with exponential scaling albeit with a smaller base). Here one tries to understand the effect of the noise on the expectation value of the observable of interest in order to find (an approximation for) the noiseless expectation value. While different noise-agnostic error mitigation methods **work** based on different principles and each technique has its own shortcomings, traditionally many of them (as briefly reviewed below) suffer from a common bottleneck: they rely on fitting the data to a specific mathematical function. This in turn introduces a systematic unknown bias to the outcome of the error mitigation.

A well-known example of noise-agnostic error mitigation is Zero Noise Extrapolation (ZNE) as introduced in K. Temme et.al, Phys. Rev. Lett. 119, 180509 (2017) cited above and Y. Li et.al, "Efficient variational quantum simulator incorporating active error minimization", Phys. Rev. X 7, 021050 (2017). Here, understanding the effects of the noise is performed by amplifying the noise and measuring the observable of interest at various noise scales. The set of noisy expectation values is then extrapolated to the limit in which the noise scale is zero. The extrapolation method is commonly based on either the Richardson technique (which uses a polynomial fit, see the above-cited references K. Temme et.al, Phys. Rev. Lett. 119, 180509, Y. Li et al., Phys. Rev. X 7, 021050, and M. Krebsbach et.al, "Optimization of Richardson extrapolation for quantum error mitigation", Phys. Rev. A 106, 062436) or a single-exponential fit (see S. Endo et.al, Phys. Rev. X8, 031027 cited above or Y. Kim et.al, "Evidence for the utility of quantum computing before fault tolerance", Nature 618, 500-505 (2023)). Nevertheless, it is known that for a quantum circuit including non-Clifford gates and in the presence of Pauli noise, the exact functional form to fit an expectation value of any Pauli observable shall be a multi-exponential function containing a sum of an unknown number of different single exponential functions (see Y. Kim et.al, Nature 618 cited above or Z. Cai "Multi-exponential error extrapolation and combining error mitigation techniques for NISQ applications", npj Quantum Information 7, 80 (2021)).

In addition, in ZNE a precise noise amplification is required. Any inaccuracy in the noise amplification, in turn, contributes to the eventual bias error. The noise amplification can be performed either by pulse-level control (see K. Temme et al., Phys. Rev. Lett. 119 cited above or A. Kandala et.al, "Error mitigation extends the computational reach of a noisy quantum processor", Nature 567, 491-495 (2019)), or gate-level control, using either unitary folding (see T. Giurgica-Tiron et.al, "Digital zero noise extrapolation for quantum error mitigation", in 2020 IEEE International Conference on Quantum Computing and Engineering (QCE) (IEEE, 2020)) or local folding (see E.F. Dumitrescu et.al, "Cloud quantum computing of an atomic nucleus", Phys. Rev. Lett. 120, 210501 (2018), A. He et.al, "Zero-noise extrapolation for quantum-gate error mitigation with identity insertions", Phys. Rev. A 102, 012426 (2020)). It has been shown that unitary folding can be more reliable compared with local folding (K. Schultz et.al, "Impact of time-correlated noise on zero-noise extrapolation", Phys. Rev. A 106, 052406 (2022)). In either case, the gate-level noise-amplification techniques perform the best once the intended noise scaling factor is an odd-integer number. Even in this case, it has been shown that the true noise scale factors can differ from the intended ones due to the fact that the noisy quantum channel describing the hardware noise may not commute with the ideal circuit unitary (see K. F. Koenig et.al, "Inverted-circuit zero-noise extrapolation for quantum gate error mitigation", (2024) arXiv: 2403.01608). More accurate noise amplification was recently achieved in a probabilistic method at the cost of having a detailed noise model, see Y. Kim et.al, Nature 618 cited above, S. Ferracin et.al, "Efficiently improving the performance of noisy quantum computers", (2022), arXiv: 2201.10672, L. Hour et.al, "Improving zero-noise extrapolation for quantum-gate error mitigation using a noise-aware folding method", (2024), arXiv: 2401.12495, (in which case the resulting error mitigation can no longer be considered a noise-agnostic method.)

In another method, see M. Urbanek et al., "Mitigating depolarizing noise on a quantum computer with noise-estimation circuits", Phys. Rev. Lett. 127, 270502 (2021), the authors introduce using an estimation circuit, obtained by removing all single qubit-gates of the target circuit, in order to find an estimation of the depolarizing rate influencing the target circuit. Once this rate is approximately found, the authors consider the depolarizing-error mitigated expectation value and use this quantity as the input for ZNE. Provided that depolarizing noise is the dominant error mechanism, the authors argue that their technique can yield more accurate results compared with the standard ZNE. It was left as an open question in this reference how to generate better estimation circuits, and whether the technique remains valid when the depolarizing noise is not the dominant error. In addition, since this technique relies on ZNE, accurate noise-amplification is required.

Another example of noise-agnostic error mitigation is Clifford Data Regression (CDR), see P. Czarnik et.al "Error mitigation with Clifford quantum-circuit data", Quantum 5, 592 (2021), and its extended model known as variable-noise Clifford Data Regression (vnCDR), see A. Lowe et.al, "Unified approach to data-driven quantum error mitigation", Phys. Rev. Res. 3, 033098 (2021). In these methods, many near-Clifford circuits are generated from the original target quantum circuit. The expectation value of the observable of interest is then found by measuring the noisy near-Clifford circuits as well as simulating them in a noise-free environment. This provides a set of training data from which one can learn (e.g., via linear regression in CDR) how the noise influences each of the simulated expectation values. However, due to generally different noise-scaling behavior between the near-Clifford circuits and non-Clifford circuits, the model learned from near-Clifford circuits is expected to become less accurate as the depth of the target non-Clifford circuit increases.

Due to these problems in the prior art, it is therefore an object of the present invention to provide a method for quantum error mitigation with improved efficiency and accuracy.

According to a first aspect of the invention, this object is attained by a method for mitigating errors caused by noise in a target quantum circuit executed by a quantum processor on the basis of a target set comprising for each of a plurality of target noise strength values an associated target estimator value for an expectation value of an observable, an auxiliary set comprising for each of a plurality of auxiliary noise strength values an associated auxiliary estimator value for an expectation value of the observable, and a noise-free auxiliary value for an expectation value of the observable, the plurality of target estimator values being determined by evaluation of target measurement data obtained by an execution of the target quantum circuit by the quantum processor at a plurality of different target noise levels, each target noise level being associated with one of the target noise strength values, the plurality of auxiliary estimator values being determined by evaluation of auxiliary measurement data obtained by an execution of an auxiliary quantum circuit different from the target quantum circuit by the quantum processor at a plurality of different auxiliary noise levels, each auxiliary noise level being associated with one of the auxiliary noise strength values, and the noise-free auxiliary value being the expectation value of the observable for a fictitious noiseless execution of the auxiliary quantum circuit or an estimator value thereof, said method comprising:

a noise-reduction step of deriving for each target noise strength value a noise-reduced target estimator value comprising first and second contributions, wherein the first contribution is derived by reducing a noise-dependency of the target estimator values on the basis of a noise-dependency of the auxiliary estimator values and the noise-free auxiliary value, and the second contribution is configured to further reduce a remaining noise-dependency of the first contribution and is derived by use of a control parameter-dependent model for the remaining noise-dependency on the basis of the auxiliary estimator values and the noise-free auxiliary value;

a control parameter step of determining an optimal value of the control parameter such that the noise-dependency of the noise-reduced target estimator values fulfills a minimization criterion;

an inference step of inferring a first error-mitigated target estimator value on the basis of the noise-reduced target estimator values with the optimal control parameter value.

At least some of the steps of the method according to the first aspect of the present invention may be implemented on a computer, in particular on a classical computer in one example. In one example, all steps may be implemented on a classical computer.

The wording used throughout this application is in line with standard terminology used in the field of quantum computation, see, e.g., the standard textbook M. Nielsen, I. Chuang, "Quantum Computation and Quantum Information".

A quantum processor may be understood as a computer that exploits the laws of quantum mechanics. In particular, the quantum processor may comprise a plurality of $N \geq 2$ quantum mechanical d-level systems, $d \geq 2$, (also known as qudits), used as the carriers of information. The quantum mechanical d-level systems are physical objects realized, e.g., in superconducting systems, photonic systems, ion systems, etc., but the invention is not limited to this. In particular, for d=2 the quantum mechanical d-level systems are qubits. For ease of representation, the present specification explains the case of qubits. However, everything said within this specification equally applies to qudits with d>2.

The qubits may be described by the mathematical formalism of quantum mechanics. There, each qubit is associated with a two-dimensional Hilbert space. Throughout this specification, we denote the two basis vectors of the Hilbert space associated with each qubit by I0> and |1>. We may also refer to these basis states as computational basis states.

The quantum processor may further comprise state preparation means configured to prepare the qubits in a predetermined initial state. In one expedient example, the initial state is of the form I00...0>, that is, all qubits are in the state I0>. However, the invention is not limited to this. The quantum processor may further comprise means configured to apply at least one quantum gate, and preferably a plurality of different quantum gates, to the N qubits. Within the mathematical formalism of quantum mechanics, a quantum gate may be understood as a unitary transformation that acts on a state of a small number of qubits. In one example, the quantum processor may be configured to apply at least one single-qubit gate and at least one two-qubit gate. In one example, the quantum processor may be a universal quantum processor. That is, the quantum processor is configured to realize any unitary transformation defined on N qubits by an application of a sequence of quantum gates.

The quantum processor may further comprise measurement means for applying a quantum measurement to the N qubits to thereby obtain measurement data. The measurement data is classical data. In one example, the quantum measurement may be a quantum measurement in the computational basis. In another example, the quantum measurement may be a measurement in the local Pauli basis of each qubit.

The quantum processor may be part of a computing system which may also comprise a classical computer configured for control of the quantum processor and/or for classical post-processing of the measurement data. The classical computer may be understood as a computer that is based on classical physics. In particular, the classical computer may be configured to apply operations, in particular binary logic gates, to classical bits.

The observable is related to a physical property of the system of the N qubits. The observable may, e.g. be the energy of a physical system encoded in the N qubits or an occupation number of one of the states I0> and I1> for each qubit, but the invention is not limited to this. Within the mathematical theory of quantum mechanics, the observable is associated with a Hermitian operator. Due to the probabilistic nature of quantum mechanics, only an expectation value of the observable may be determined. In an experiment with finite statistics, only an estimator value of the expectation value of the observable may be determined. In one example, the estimator value may be a mean value. The quantum measurement is such that the obtained measurement data allows to determine the estimator value of the observable from the measurement data.

A quantum circuit executed by the quantum processor comprises instructions on the N qubits. In particular, the quantum circuit comprises instructions which specify an initial state of the N qubit which may be understood as a starting point of the computation. In one example, the initial state may be the state described by I00...0>. The quantum circuit further comprises instructions specifying a gate sequence of quantum gates which, in the noiseless case, realize a unitary transformation on the N qubits. In an expedient example, each quantum gate of the sequence of quantum gates may be a single-qubit gate or a two-qubit gate. The quantum circuit further comprises an instruction to apply a quantum measurement on the N qubits. In one example, the quantum measurement is the measurement in the computational basis of the N qubits.

Due to the probabilistic nature of quantum mechanics, an execution of the quantum circuit comprises an implementation of a number of S shots of the quantum circuit. A shot of the quantum circuit is an implementation of the instructions of the quantum circuit as explained above, i.e. state preparation of the initial state, application of the quantum gate sequence and quantum measurement. Each shot s results in an associate measurement outcome of the quantum measurement. The measurement data comprises all measurement outcomes. The measurement data may allow to calculate the estimator value of the observable O. In one example, the estimator value may be the mean value of the observable. In one example, S is at least $10^4$, preferably at least $10^5$, more preferably at least $10^6$. In another example, S may be less than $10^4$.

The execution of any quantum circuit on a quantum processor is inevitably noisy. The noise level, i.e. the strength of the noise, may be associated with a noise strength value (also known as noise scale factor in the art) $\lambda$. A value of $\lambda = 1$ may be associated with the base hardware noise. That is, $\lambda = 1$ is associated with the least noisy execution of the quantum circuit on the respective quantum processor. Therefore, all noise strength values may fulfill $\lambda \geq 1$. In one example, the noise strength values increase with the noise level. As it is known in the art of quantum error mitigation, there are various noise scaling techniques to increase the noise level and thereby the noise strength value $\lambda$ of an execution of a quantum circuit. One example is unitary folding, wherein the target (auxiliary) gate sequence of the target (auxiliary) quantum circuit is supplemented with further quantum gates so that the total unitary transformation realized by the supplemented gate sequence is equal to the target (auxiliary) gate sequence in the noiseless case. This may be achieved, for example, by inserting a quantum gate and its inverse into the target (auxiliary) gate sequence. The implementation of the supplemented quantum gates introduces additional noise in the execution of the quantum gate sequence. For example, when the quantum gate sequence is described by a unitary U, noise strength values $\lambda_m = 2m + 1$, m = 1, ..., M may be achieved by an application of a supplemented gate sequence described by a unitary $(UU^\dagger)^m U$. However, the invention is not limited to unitary folding, and other possibilities of executing quantum circuits at various noise strength values will be explained below. In particular, the target (auxiliary) noise strength values $\lambda$ are always at least 1 (base hardware noise) and may in particular have an integer or a rational value, though it is not limited to this. Furthermore, within this specification, we denote the plurality of different target noise strength values associated with the plurality of different target noise levels as

$$\lambda_1^{(t)} < \lambda_2^{(t)} < \cdots < \lambda_M^{(t)}, M \geq 3,$$ and we denote the plurality of different auxiliary noise strength values associated with the plurality of different auxiliary noise levels as $\lambda_1^{(a)} < \lambda_2^{(a)} < \cdots < \lambda_{M'}^{(a)}$, M' $\geq 3$. In one example, $\lambda_1^{(t)} = 1$ and/or

$\lambda_1^{(a)} = 1$. The difference between two consecutive noise strength values, $\lambda_{m+1}^{(t,a)}$ and $\lambda_m^{(t,a)}$ is also denoted as spacing between these noise strength values. The spacing may be uniform for the noise strength values of the plurality in one example. In another example, the spacing may be different for at least two pairs of consecutive noise strength values. The number of different target and auxiliary noise levels, i.e., the number of different noise strength values, may be M=3, 4, 5, or more and/or M' = 3, 4, 5 or more in one example. More noise levels are computationally more costly but may result in a higher accuracy of the error-mitigated target estimator value.

In one expedient example, the number of different target noise strength values is equal to the number of different auxiliary noise strength values. In one example, the target and auxiliary noise strength values are equal in their number and their values, i.e. $\lambda_m^{(t)} = \lambda_m^{(a)}$ for each m = 1, ..., M. However, the invention is not limited to this.

The target quantum circuit is a quantum circuit of interest. For example, the target quantum circuit may solve a particular computational problem of interest. In particular, the computational problem may not be solvable efficiently on a classical computer, but the target quantum circuit may allow for an efficient solution on the quantum processor. The target quantum circuit is defined on the N$\geq$2 qubits of the quantum processor. The target quantum circuit comprises instructions to apply a target gate sequence to an initial target state of the N qubits to thereby obtain a final target state. A target measurement is applied to the final target state to thereby obtain target measurement data.

The auxiliary quantum circuit is defined on the same number N of qubits as the target quantum circuit. The auxiliary quantum circuit comprises instructions to apply an auxiliary gate sequence to an initial auxiliary state of the N qubits to thereby obtain a final auxiliary state. An auxiliary measurement is applied to the auxiliary final state to thereby obtain the auxiliary measurement data. In one expedient example, the initial auxiliary state is identical to the initial target state. Additionally, or alternatively, the auxiliary measurement may be identical to the target measurement.

The auxiliary gate sequence may be derived from the target gate sequence in one example. In particular, the auxiliary gate sequence is different from the target gate sequence. The auxiliary gate sequence and the target gate sequence may be such that they have certain quantum gates in common but that they differ in other quantum gates of their respective quantum gate sequences in one example. In particular, the auxiliary quantum circuit may be such that the final auxiliary state of the fictitious noiseless execution of the auxiliary quantum circuit, in particular of the noiseless implementation of the auxiliary gate sequence is known or may be obtained in an efficient way. In one example, the auxiliary quantum circuit may be efficiently classically simulable. In particular, a quantum circuit is efficiently classically simulable when its runtime scales less than exponential in the number of qubits, and in particular linear in the number of qubits. In particular, the auxiliary quantum circuit may comprise only Clifford gates as it is efficiently classically simulable in this case. (This is also known as Gottesman-Knill theorem; see also D. Gottesman, "The Heisenberg Representation of Quantum Computers", arXiv:quant-ph/9807006v1.) For example, the auxiliary gate sequence may be derived from the target gate sequence by replacing each non-Clifford gate by some Clifford gate. In another example, the auxiliary quantum gate sequence may be such that the final auxiliary state obtained by an application of the auxiliary quantum gate sequence to the auxiliary initial state is known. For example, the auxiliary quantum gate sequence may correspond to a unitary transformation which has a simple or trivial action on the auxiliary initial state, for example the auxiliary gate sequence may be equivalent to a unitary transformation which is the identity.

According to the method of the first aspect of the present invention, the target set comprises for each of the plurality of target noise strength values $\lambda_1^{(t)} < \lambda_2^{(t)} < ... < \lambda_M^{(t)}$, M$\geq$3, an associated target estimator value for the expectation value of the observable. The target set may comprise tuples $(\lambda_m^{(t)}, E(\lambda_m^{(t)}, T))$ wherein $E(\lambda_m^{(t)}, T)$ denotes

the target estimator value for the expectation value of the observable obtained by the execution of the target quantum circuit with the target noise strength value $\lambda_m^{(t)}$. That is, the target set comprises classical data. The target set may be provided as an input to the method or it may be derived as part of the method as is further explained below. In a similar way, the auxiliary set comprises for each of the plurality of auxiliary noise strength values an associated auxiliary estimator value for the expectation value of the observable. That is, the auxiliary set may comprise tuples ( $\lambda_m^{(a)}$, $E$ $(\lambda_m^{(a)}, A)$) wherein $E$ $(\lambda_m^{(a)}, A)$ denotes the auxiliary estimator value for the expectation value of the observable obtained by the execution of the auxiliary quantum circuit with the auxiliary noise strength value $\lambda_m^{(a)}$. Similar to the target set, the auxiliary set comprises classical data. The auxiliary set may be provided as an input to the method or it may be derived as part of the method as it is further explained below.

The noise-free auxiliary value is the expectation value of the observable for a final state of the (fictitious) noiseless execution of the auxiliary quantum circuit or an estimator value thereof. The noise-free auxiliary value is denoted as E(0, A) throughout this specification. In certain cases, e.g., when the final auxiliary state of the noiseless execution of the auxiliary quantum circuit is known, the noise-free auxiliary value may be the exact expectation value. In other instances, e.g., when the final auxiliary state of the noiseless execution of the auxiliary quantum circuit is obtained by a classical simulation of the noiseless execution of the auxiliary quantum circuit, the noiseless auxiliary value may be an estimator value of the expectation value, or it may be the exact expectation value.

The method comprises data processing of the target set, the auxiliary set and the noise-free auxiliary value. The method comprises a noise reduction step wherein for each target noise strength value a noise-reduced target estimator value is derived. The deriving is such that the set of the derived noise-reduced target estimator values has a reduced noise-dependency compared to the target estimator values of the target set. For example, a value of a measure of dispersion for the plurality of noise-reduced target estimator values may be smaller than a value of the measure of dispersion for the plurality of target estimator values.

The deriving of the noise-reduced target estimator values is such that each noise-reduced target estimator value associated with one of the target noise strength values comprises first and second contributions. In one expedient example, each noise-reduced target estimator value may comprise only the first and second contributions and no further contribution. The first contribution is derived by reducing the noise-dependency of the target estimator values on the basis of the noise-dependency of the auxiliary estimator values and the noise-free auxiliary value. For example, one may assume that the target estimator values and the auxiliary estimator values have a similar noise dependency. Specific examples how the noise dependency of the target estimator values may be reduced are presented below. The first contribution is denoted as $P_1(E(\lambda_m^{(t)}, T), \{E(\lambda_{m'}^{(a)}, A)\}_{m'=1}^{M'})$ within this specification. Deriving noise-reduced target estimator values having only the first contribution is known in the art. Here, the notation $P_1(E(\lambda_m^{(t)}, T), \{E(\lambda_{m'}^{(a)}, A)\}_{m'=1}^{M'})$ means that for each target noise strength value $\lambda_m^{(t)}$ the first contribution depends on the target estimator value $E(\lambda_m^{(t)}, T)$ for the target noise strength value $\lambda_m^{(t)}$ and all auxiliary estimator values $\{E(\lambda_{m'}^{(a)}, A)\}_{m'=1}^{M'}$ or a subset thereof.

In general, the first contribution still has some noise dependency as the target and auxiliary quantum circuits differ and therefore their noise behavior will in general not be identical. Therefore, a control parameter-dependent model is used to further reduce the remaining noise dependency of the first contribution. The control parameter is in particular a real-valued parameter. The model may be derived on the basis of well-thought considerations. Possible examples of such models will be presented below. In one expedient example, the control parameter-dependent model may be linear in the control parameter. The second contribution is denoted by $P_2(\lambda_m^{(t)}, \{E(\lambda_{m'}^{(a)}, A)\}_{m'=1}^{M'}, E(0, A), n)$, wherein n is the control parameter. In particular, the control parameter may be a single parameter, and in particular a single real-valued parameter, in one example, but the invention is not limited to this. In another example, the control parameter may comprise a plurality of control parameters, preferably a plurality of real-valued control parameters. Here, the notation $P_2(\lambda_m^{(t)}, \{E(\lambda_{m'}^{(a)}, A)\}_{m'=1}^{M'}, E(0, A), n)$ means that for each target noise strength value $\lambda_m^{(t)}$ the second

contribution depends on the noise-free auxiliary estimator value, the control parameter n and all auxiliary estimator values or a true subset thereof.

In one expedient example, the noise-reduced target estimator value for the target noise strength value $\lambda_m^{(t)}$ may be of the following form:

$$E_{red}(\lambda_m^{(t)}, n) = P_1(E\left(\lambda_m^{(t)}, T\right), \left\{E(\lambda_{m'}^{(a)}, A)\right\}_{m'=1}^{M'}) + P_2(\lambda_m^{(t)}, \left\{E\left(\lambda_{m'}^{(a)}, A\right)\right\}_{m'=1}^{M'}, E(0, A), n).$$

For each target noise strength value, the first and second contributions may depend on all auxiliary estimator values or a true subset thereof. The true subset may be different for different target noise strength values. In one example where the number of target and auxiliary noise strength values is identical, $\lambda_m^{(a)} = G(\lambda_m^{(t)})$ for some bijective function G.

In this case, the value of the first and second contributions for the target noise strength value $\lambda_m^{(t)}$ may only depend on the associated auxiliary noise strength value $\lambda_m^{(a)} = G(\lambda_m^{(t)})$ in one example. I.e.,

$$E_{red}(\lambda_m^{(t)}, n) = P_1(E(\lambda_m^{(t)}, T), E(G\left(\lambda_m^{(t)}\right), A)) + P_2(\lambda_m^{(t)}, E(G\left(\lambda_m^{(t)}\right), A), E(0, A), n).$$ In one expedient example, $\lambda_m^{(a)} = G\left(\lambda_m^{(t)}\right) = x\lambda_m^{(t)}$ for some positive x > 0. In particular, x=1. Then,

$$E_{red}(\lambda_m^{(t)}, n) = P_1(E\left(\lambda_m^{(t)}, T\right), E(x\lambda_m^{(t)}, A)) + P_2(\lambda_m^{(t)}, E\left(x\lambda_m^{(t)}, A\right), E(0, A), n).$$

The noise-reduced target estimator values derived in the noise reduction step depend on the value of the control parameter n.

The method further comprises a control parameter step of determining an optimal value of the control parameter such that the noise-dependency of the noise-reduced target estimator values fulfils the minimization criterium. For example, the optimal value of the control parameter may be selected such that a value of a measure of dispersion of the noise-reduced target estimator values is below a threshold value. In particular, the optimal value of the control parameter may be determined such that the value of the measure of dispersion is minimal. In one particular example, the value of the control parameter may be selected such that the value of the measure of dispersion is zero.

Once the optimal value of the control parameter is determined, a first error-mitigated target estimator value is determined on the basis of the noise-reduced target estimator values with the optimal control parameter value in the inference step. In one example of the invention, the first error-mitigated target estimator value may be a final error-mitigated target estimator value of the method. In some examples, the noise-reduction step and/or the control parameter step and/or the inference step may be performed at least partially, and in particular completely, on a classical computer.

Due to the special structure of the noise-reduced target estimator value with the first and second contributions, the noise-reduced target estimator values of the method according to the present invention may result in a final target estimator value which is robust against an inaccuracy in noise scaling and/or a choice of a spacing of the noise strength values.

In one embodiment of the method according to the first aspect of the present invention, the inference step may further comprise:

  calculating a value of a normalized measure of dispersion for the noise-reduced target estimator values with the optimal control parameter value, the value of the normalized measure of dispersion being indicative of a ratio of a value of a first measure of dispersion for the noise-reduced target estimator values with the optimal control parameter value and a value of the first measure of dispersion for the target estimator values;

  and wherein the value of the normalized measure of dispersion is used to determine a final error-mitigated target estimator value.

In one expedient example of the embodiment, the first measure of dispersion may be a function of or may be equal to the variance, the standard deviation or the mean absolute difference, but the invention is not limited to this. The normalized measure of dispersion may be a function of or may be equal to the ratio of the value of the first measure of dispersion for the noise-reduced target estimator values with the optimal control parameter value and the value of the first measure of dispersion for the target estimator values. In one example, the normalized measure of dispersion may be of the following form:

$$D_N = \frac{D_1\left(\left\{E_{red}\left(\lambda_m^{(t)},\ n_{op}\right)\right\}_{m=1}^{M}\right)}{D_1\left(\left\{E\left(\lambda_m^{(t)},T\right)\right\}_{m=1}^{M}\right)}$$

Here, $D_1$ denotes the first measure of dispersion $\left\{E_{red}\left(\lambda_m^{(t)}, n_{op}\right)\right\}_{m=1}^{M}$ denotes the set of M noise-reduced target estimator values (m = 1,..., M) for the optimal control parameter value, $n_{op}$, and $\left\{E\left(\lambda_m^{(t)},T\right)\right\}_{m=1}^{M}$ denotes a set of the plurality of M target estimator values (m = 1,..., M) of the target set. The value of the normalized measure of dispersion is used in the inference step to determine a final error-mitigated target estimator value as will be explained in more detail below.

In one embodiment of the method according to the first aspect of the present invention, the method may further comprise:
verifying whether the value of the normalized measure of dispersion is below a predetermined threshold value and accepting or rejecting the first error-mitigated target estimator value as the final error-mitigated target estimator value depending on the outcome of the verification. In particular, when the value of the normalized measure of dispersion is below the predetermined threshold value, the first error-mitigated target estimator value may be accepted as the final error-mitigated target estimator value, and when the value of the normalized measure of dispersion is above the predetermined threshold value, the first error-mitigated target estimator value may be rejected as the final error-mitigated target estimator value. In the latter case, the method may be repeated with another auxiliary quantum circuit that may potentially lead to a smaller value of the normalized measure of dispersion. In one example, the threshold value may be 0.5 or smaller, preferably 0.4 or smaller, more preferably 0.3 or smaller, and further preferably 0.2 or smaller. The verifying may be performed by a classical computer, in one example. In general, one may expect better results than ZNE whenever the threshold value is smaller than or equal to 1.

In another embodiment of the method according to the present invention, the method may further comprise:

resampling over the target and auxiliary measurement data for each target and auxiliary noise strength value, respectively, according to a resampling method, the resampling method being preferably a bootstrapping method, to thereby generate a plurality of resampled target and auxiliary sets, each comprising for every target and auxiliary noise strength value resampled target and auxiliary estimator values, respectively, and selecting a plurality of pairs of resampled target and auxiliary sets;

applying the noise-reduction step, the control parameter step, and the inference step to each selected pair of resampled target and auxiliary sets to thereby obtain for each resampled pair a resampled first error-mitigated target estimator value and a resampled value of the normalized measure of dispersion;

and wherein the final error-mitigated target estimator value is inferred on the basis of the resampled first error-mitigated target estimator values and the associated resampled values of the normalized measure of dispersion.

The resampling may be performed on a classical computer in one example.

As has been explained above, the target estimator value associated with a certain value of the target noise strength is determined by evaluation of target measurement data obtained by an execution of the target quantum circuit at the target noise level associated with the respective target noise strength value. Similarly, the auxiliary estimator value associated with a certain value of the auxiliary noise strength is determined by evaluation of auxiliary measurement data obtained by an execution of the auxiliary quantum circuit at the auxiliary noise level associated with the respective auxiliary noise strength value. In particular, the target and auxiliary measurement data comprises for each target and auxiliary noise strength value associated measurement data. The target (auxiliary) measurement data associated with each value of the target and (auxiliary) noise strength comprises for each shot s of the S shots of the target and auxiliary quantum circuits, target and auxiliary measurement outcomes, respectively. I.e., the target (auxiliary) measurement data may be understood as a sample of size S. According to the embodiment, a plurality of resampled target and auxiliary sets are generated for each value of the target and auxiliary noise strength by resampling according to a resampling method. In one example, the resampling method is a bootstrapping method. Bootstrapping is a method known in the field of statistic, see e.g., D. Moore et al. "Introduction to the practice of statistics", Nineth Edition. The resampling for the generation of the resampled target (auxiliary) sets may comprise for each of the target (auxiliary) noise strength values resampling R>1 times from the target (auxiliary) measurement data associated with the respective target (auxiliary) noise strength value. Resampling may mean sampling with replacement in one example. Thereby, a plurality of R resamples of the target (auxiliary) measurement data of size S may be generated, each comprising S resampled target (auxiliary) measurement outcomes.

Then, for each resampled set labelled by a resampling index r, r=1, ..., R, a resampled target (auxiliary) estimator value $E^{cl}(\lambda_m^{(t)}, T, r)$ $(E^{cl}(\lambda_m^{(a)}, A, r))$ for the expectation value of the observable may be determined by evaluating the resampled target (auxiliary) measurement data. Thereby, a plurality of R resampled target (auxiliary) sets may be generated, e.g., $\{E^{cl}(\lambda_m^{(t)}, T, r)\}_{m=1}^{M}$ $(\{E^{cl}(\lambda_{m'}^{(a)}, A, r)\}_{m'=1}^{M'})$. However, the resampled target (auxiliary) sets may also comprise resampled target (auxiliary) estimator values with different resampling indices r as long as each set comprises a target (auxiliary) estimator value for each value $\lambda_m^{(t)}$ $(\lambda_{m'}^{(a)})$ of the target (auxiliary) noise strength and each resampled target (auxiliary) estimator value is an element of exactly one resampled target (auxiliary) set. Next, one may select a plurality of, preferably R, pairs of resampled target and auxiliary sets from the R resampled target and auxiliary sets and apply the noise reduction step, the control parameter step and the inference step to each pair of resampled target and auxiliary sets. This results for each resampled pair in a resampled first error-mitigated target estimator value and a resampled value of the normalized measure of dispersion. The final error-mitigated target estimator value is then inferred on the basis of the resampled first error-mitigated target estimator values and the associated resampled values of the normalized measure of dispersion.

The above embodiment may allow to improve the accuracy of the final error-mitigated target estimator value by classical resampling.

In one example of the embodiment, inferring the final error-mitigated target estimator value may be on the basis of the resampled first error-mitigated target estimator value with the smallest resampled value of the normalized measure of dispersion among the resampled first error-mitigated target estimator values. I.e., only a single resampled first error-mitigated target estimator value, namely the one with the smallest value of the normalized measure of dispersion, is used for inferring the final error-mitigated target estimator value. In one example, the final error-mitigated target estimator value is determined as the resampled first error-mitigated target estimator value with the smallest resampled value of the normalized measure of dispersion.

However, the embodiment is not limited to this, and in another example of the embodiment, inferring the final error-mitigated target estimator value may comprise:

defining a fitting model for a data set which comprises for each pair of resampled sets a tuple of the associated resampled value of the normalized measure of dispersion and the associated resampled first error-mitigated target estimator value, fitting the fitting model to the data set and estimating the resampled first error-mitigated target estimator value for a value of zero for the resampled normalized measure of dispersion according to the fitting model to thereby infer the final error-mitigated target estimator value. That is, the tuples of the resampled first error-mitigated target estimator value and associated resampled value of the normalized measure of dispersion are used to infer the final error-mitigated target estimator value at zero normalized measure of dispersion. Thereby, the bias error of the final error-mitigated target estimator value may be reduced compared to methods of the prior art. In this way, the accuracy of the final error-mitigated target estimator value may be improved compared to the accuracy of the first target estimator value and may also be improved compared to the accuracy of the resampled first error-mitigated target estimator with the smallest resampled value of the normalized measure of dispersion among the resampled first error-mitigated target estimator values. This embodiment of the method has some robustness in the accuracy of noise scaling, the choice of the noise level spacing, the choice of the auxiliary quantum circuit, the circuit depth of the target and auxiliary circuits, the readout error and the coherent error. In particular, the embodiment shows some resilience with respect to the number of shots used to derive the target and auxiliary measurement data.

In one example of the embodiment, estimating the resampled first error-mitigated target estimator value for a value of zero of the resampled normalized measure of dispersion according to the fitting model may comprise extrapolating the fitting model to the limit of zero for the value of the normalized measure of dispersion.

In one example, the fitting model may be a linear model.

In one example, the final error-mitigated target estimator value may be determined as the estimated value of the resampled first error-mitigated target estimator value at the value of zero for the resampled value of the normalized measure of dispersion.

In one embodiment, defining the fitting model may comprise defining a parameter-dependent weighted regression model with parameter-dependent weights assigned to the resampled first error-mitigated target estimator values,

and the method may further comprise for each parameter value of a plurality of parameter values fitting the weighted regression model with the parameter value to the data set, estimating an associated resampled first error-mitigated target estimator value for a value of zero for the resampled normalized measure of dispersion according to the fitted weighted regression model with the parameter value to thereby obtain a second error mitigated target estimator value, calculating a value of a statistical error of the second error-mitigated target estimator value associated with the parameter value and inferring the final error-mitigated target estimator value on the basis of the second error-mitigated target estimator values and the values of the statistical error. The parameter-dependent weights of the method according to the example allow to further improve the accuracy of the final error-mitigated target estimator value. In one example, these steps may be implemented by a classical computer.

Weighted regression models are well known in the art of data analysis. They comprise a regression model and weights assigned to the data points. In the present case of a parameter-dependent weighted regression model the weights are parameter-dependent and may take a plurality of parameter values. Here, the weights are assigned to the resampled first error-mitigated target estimator values, and the form of the weights and the plurality of parameter values is such that the larger the value of the resampled value of the normalized measure of dispersion the smaller the weight assigned to the associated resampled first error-mitigated target estimator value, and thereby the smaller its contribution in the fit.

For each parameter value, the second error-mitigated target estimator value is the estimated resampled first error-mitigated target estimator value for the value of zero for the resampled normalized measure of dispersion according to the fitted weighted regression model with the parameter value. The resampled first error-mitigated target estimator value for the value of zero for the resampled normalized measure of dispersion may be estimated by extrapolating the fitted weighted regression model to the value of zero for the resampled normalized measure of dispersion in one example.

In one example, the final error-mitigated target estimator value may be inferred as the second error-mitigated target estimator value with the smallest value of the statistical error.

In one example, the regression model may be a linear regression model, but the invention is not limited to this. In one example, ordinary least squares may be used to estimate the parameters of the model, but the invention is not limited to this.

In one example, the statistical error of the second error-mitigated target estimator value may be a function of or may be equal to the variance, the standard deviation or the mean absolute difference of the second error-mitigated target estimator value. In one example, the statistical error of the second error-mitigated target estimator value may be a function of or may be equal to the ratio of the variance, the standard deviation or the mean absolute difference of the second error-mitigated target estimator value and the variance, the standard deviation or the mean absolute difference of the target estimator values.

The data set is of the form $\{(E_1(1), D_N(1)),..., \{(E_1(r), D_N(r)),..., (E_1(R), D_N(R))\}$, wherein r=1,...,R is an index for the resampled tuple of the resampled first error-mitigated target estimator value $E_1(r)$ and the resampled normalized measure of dispersion $D_N(r)$. In one example, the parameter-dependent weights may be a function of the resampled normalized measure of dispersion. In one example, the weight assigned to the resampled first error-mitigated target estimator value $E_1$ (r) with resampled value of the normalized measure of dispersion $D_N(r)$, r=1, ..., R, may be equal to a value of a parameter-dependent function of the value of the normalized measure of dispersion $D_N(r)$. I.e., the weight w(r) assigned to the resampled first error-mitigated target estimator value $E_1(r)$ may be w(r)= $F(D_N(r))$, wherein $F(\cdot)$ is a function. In certain examples, the weight w(r) assigned to the resampled first error-mitigated target estimator value $E_1(r)$ may be of the form $1/D_y(r)^\alpha$ or $e^{-\frac{D_N(r)}{\alpha}}$ with positive parameter $\alpha$.

In one example defining the fitting model may comprise defining a single weighted regression model. In another example, defining the fitting model may comprise defining a plurality of at least two weighted regression models with different functional forms of the assigned parameter-dependent weights. The method according to the example further comprises for each parameter value of a plurality of parameter values fitting each of the weighted regression models of the plurality of weighted regression models with the parameter value to the data set, estimating an associated resampled first error-mitigated target estimator value for a value of zero for the normalized measure according to the respective fitted weighted regression model with the parameter value to thereby obtain a second error-mitigated target estimator value, calculating a value of a statistical error of the second error-mitigated target estimator value associated with the parameter value and the respective regression model and inferring the final error-mitigated target estimator value on the basis of the second error-mitigated target estimator values and the values of the statistical error. In this way, the accuracy of the final error-mitigated target estimator value may be further improved, as a plurality of possible forms for the weights is used.

The method according to the embodiment may be useful for reducing the number of shots in the execution of the target and auxiliary quantum circuits that are required for obtaining a certain accuracy for the final error-mitigated target estimator value in the following way:

In an initial step, an initial data set of tuples of resampled first error-mitigated target estimator values and resampled values of the normalized measure of dispersion may be created on the basis of a plurality of initial resampled target and auxiliary sets generated by resampling over initial target and auxiliary measurement data obtained by executing the target and auxiliary quantum circuits at each of the target and auxiliary noise strength values, respectively, for an initial number of shots, as has been explained above.

Then, a parameter-dependent weighted regression model with parameter-dependent weights assigned to the resampled first error-mitigated target estimator values may be defined, and for each parameter value of a plurality of parameter values the weighted regression model with the parameter value may be fitted to the initial data set. An associated resampled first error-mitigated target estimator value for a value of zero for the normalized measure may be estimated according to the weighted regression model with the parameter value, e.g., by extrapolation, to thereby obtain a second error-mitigated target estimator value, and a value of a statistical error of the second error-mitigated target estimator value (e.g., the variance or the standard deviation) associated with the parameter value may be calculated.

If the value of the statistical error (e.g., the variance or the standard deviation) of at least one second error-mitigated target estimator value is below a predetermined threshold value, the final error-mitigated target estimator value may be inferred on the basis of the second error-mitigated target estimator values and the values of the statistical error. For example, the final target estimator value may be inferred as the second error-mitigated target estimator value with the smallest value for the statistical error (e.g., the smallest variance or smallest standard deviation).

If the value of the statistical error (e.g., the variance of the standard deviation) of each second error-mitigated target estimator value is above the predetermined threshold value, updated target and auxiliary measurement data that comprise measurement results of more shots than the initial number of shots may be provided in a second step. To this end, the target and auxiliary quantum circuits may be executed at each of the target and auxiliary noise strength values for another number of shots to thereby obtain other target and auxiliary measurement data, respectively. The initial and other target and auxiliary measurement data may be combined to thereby obtain the updated target and auxiliary measurement data, respectively.

Then, the initial step may be repeated for the updated target and auxiliary measurement data. I.e., an updated data set of tuples of resampled first error-mitigated target estimator values and resampled values of the normalized measure of dispersion may be created on the basis of a plurality of updated resampled target and auxiliary sets generated by resampling over the updated target and auxiliary measurement data as explained above. The parameter-dependent weighted regression model with parameter-dependent weights assigned to the resampled first error-mitigated target estimator values may be defined, and for each parameter value of the plurality of parameter values the weighted regression model with the parameter value may be fitted to the updated data set. Then, an associated resampled first error-mitigated target estimator value for a value of zero for the normalized measure may be estimated according to the weighted regression model with the parameter value to thereby obtain a second error-mitigated target estimator value, and a value of the statistical error of the second error-mitigated target estimator value (e.g., the variance or the standard deviation) associated with the parameter value may be calculated.

Then, it is verified if the value of the statistical error (e.g., the variance or the standard deviation) of at least one second error-mitigated target estimator value is below the predetermined threshold value. If the answer is YES, the final error-mitigated target estimator value may be inferred on the basis of the second error-mitigated target estimator values and the values of the statistical error. E.g., the final error-mitigated target estimator value may be inferred as the second error-mitigated target estimator value with the smallest value of the statistical error (e.g., the variance or the standard deviation).

If the answer is NO, further updated target and auxiliary measurement data that comprises measurement results of more shots than the initial and other number of shots may be provided, as explained above.

The initial step may be repeated with updated target and auxiliary measurement data comprising measurement outcomes of more and more shots until the value of the statistical error (e.g., the variance or the standard deviation) of at least one second error-mitigated target estimator value is below the predetermined threshold value. In this way, the number of shots may be increased from a relatively small value and may be adapted to the desired accuracy for the final error-mitigated target estimator value.

In one expedient embodiment of the method according to the first aspect of the present invention, the noise-reduced target estimator value may be derived in the noise-reduction step such that in the zero-noise limit the noise-reduced target estimator value is equal to the target estimator value, and wherein inferring the first target estimator value in the inference step may comprise estimating the zero-noise limit of the noise-reduced target estimator value with the optimal control parameter value. In particular, this equality is independent of the value of the control parameter. Thereby, the first error-mitigated target estimator value may be determined as the zero-noise limit of the noise-reduced target estimator value. However, the invention is not limited to this, and the noise-reduced target estimator value may be derived such that in the zero-noise limit the noise-reduced target estimator value is proportional to the target estimator value or a value of an invertible function applied to the target estimator value in certain examples. The embodiment allows for a particularly simple way to infer the first target estimator value on the basis of the noise-reduced target estimator values.

In another embodiment of the method according to the present invention, deriving the first contribution of the noise-reduced target estimator value for each target noise strength value comprises assigning one auxiliary noise strength value to the target estimator value and dividing the target estimator value associated with the target noise strength value by the auxiliary estimator value associated with the assigned auxiliary noise strength value and by multiplying the result with the noise-free auxiliary value, and

wherein the parameter-dependent model for the remaining noise-dependency of the first contribution may comprise a term which is a product of the control parameter and a noise-cancelling function in the noise strength which depends on the auxiliary estimator values and the noise-free auxiliary value and has a noise-dependency which is reduced compared to the noise-dependency of the auxiliary estimator values.

In particular, in the embodiment the assignment of the auxiliary noise strength values may be one-to-one, i.e., the number of target and auxiliary noise strength values is identical, and there is a bijective function such that $\lambda_m^{(a)} = G(\lambda_m^{(t)})$. In one expedient example, $\lambda_m^{(a)} = x\lambda_m^{(t)}$ for some positive x>0. In particular, x=1. That is, the first contribution may be of the form

$$P_1\left(E(\lambda_m^{(t)},\ T), E(G(\lambda_m^{(t)}),\ A)\right) = \frac{E(\lambda_m^{(t)},T)}{E(G(\lambda_m^{(t)}),A)}\ E(0,A).$$

The first contribution $P_1\left(E(\lambda_m^{(t)},\ T), E(G(\lambda_m^{(t)}),\ A)\right)$ may have a reduced noise-dependency compared to the target estimator values $E(\lambda_m^{(t)}, T)$, in particular when the target and auxiliary estimator values have a similar noise-dependency.

The parameter-dependent model may be expressed as

$$P_2\left(\lambda_m^{(t)}, \left\{E(\lambda_{m'}^{(a)},A)\right\}_{m'=1}^{M'}, E(0,A), n\right) = n \cdot f\left(\lambda_m^{(t)}, \left\{E(\lambda_{m'}^{(a)},A)\right\}_{m'=1}^{M'}, E(0,A)\right),$$

wherein f is the noise-cancelling function and n is the control parameter. In one expedient example, the control parameter is real-valued and/or the noise-cancelling function is real-valued. The control parameter-dependent model of the embodiment is linear in the control parameter n. In one example, the value of the noise-cancelling function for each target noise strength value may depend only on the auxiliary estimator value for the assigned auxiliary noise strength value and the noise-free auxiliary estimator value, i.e.,

$$P_2\left(\lambda_m^{(t)}, \left\{E(\lambda_{m'}^{(a)},A)\right\}_{m'=1}^{M'}, E(0,A), n\right) = n \cdot f\left(E(G(\lambda_m^{(t)}),\ A), E(0,A)\right).$$

In one expedient example, the noise-canceling function may be of the form

$$f\left(E(G(\lambda_m^{(t)}),A), E(0,A)\right) = \log\left(\frac{E(0,A)}{E(G(\lambda_m^{(t)}),A)}\right).$$

In this case, the second contribution may be of the following form:

$$P_2\left(\lambda_m^{(t)}, E(G(\lambda_m^{(t)}),A), E(0,A), n\right) = n \log\left(\frac{E(0,A)}{E(G(\lambda_m^{(t)}),A)}\right).$$

In general, one expects that the auxiliary estimator values decay exponentially with the noise strength value. Thereby, the logarithmic function of the model has a noise-dependency which is reduced compared to the noise-dependency of the auxiliary estimator values.

In one expedient example where $\lambda_m^{(a)} = G\left(\lambda_m^{(t)}\right) = x\lambda_m^{(a)}$, the noise-reduced target estimator value may be of the form

$$E_{red}(\lambda_m^{(t)}, n) = \frac{E\left(\lambda_m^{(t)},T\right)}{E\left(x\lambda_m^{(t)},A\right)}E(0,A) + n \log\left(\frac{E(0,A)}{E(x\lambda_m^{(t)},A)}\right).$$

In particular, x=1 in one example.

In one further embodiment of the method according to the first aspect of the present invention, the minimization criterion may be fulfilled when a zero-noise limit of a K-th Taylor polynomial of the noise-reduced target estimator value in the noise strength about an expansion value selected among the plurality of target noise strength values, wherein derivatives are replaced by difference quotients which are expressed in terms of the noise-reduced target estimator values, is equal to the noise-reduced target estimator value associated with the expansion value, wherein inferring the first error mitigated target estimator value in the inference step is on the basis of the noise-reduced target estimator value associated with the expansion value and obtained for the optimal control parameter value, and wherein

preferably the target noise strength values increase with the noise level, and the expansion value is the smallest target noise strength value of the plurality of target noise strength values.

The K-th Taylor polynomial $T^{[K]}$ of the noise-reduced target estimator value in the noise strength about an expansion value $\lambda_{m_e}^{(t)}$ selected among the plurality of target noise strength values is of the form

$$T^{[K]}(\lambda) = E_{red}\left(\lambda_{m_e}^{(t)}, n\right) + \sum_{k=1}^{K} \frac{\left(\lambda - \lambda_{m_e}^{(t)}\right)^k}{k!} E_{red}^{[k]}(\lambda_{m_e}^{(t)}, n)$$

wherein $E_{red}^{[k]}(\lambda_{m_e}^{(t)}, n)$ is a k-th order difference quotient which approximates the k-th derivative $\frac{\partial^k E_{red}(\lambda, n)}{\partial \lambda^k}\big|_{\lambda=\lambda_{m_e}^{(t)}}$ of the noise-reduced target estimator value at the expansion value $\lambda_{m_e}^{(t)}$. A k-th order difference quotient $Q^{[k]}\left(\lambda_{m_e}^{(t)}\right)$ which approximates the k-th derivative $\frac{\partial^k Q(\lambda)}{\partial \lambda^k}\big|_{\lambda=\lambda_{m_e}^{(t)}}$ of a function $Q(\lambda)$ in the noise strength at the value $\lambda_{m_e}^{(t)}$ may be represented as $Q^{[k]}\left(\lambda_{m_e}^{(t)}\right) = \sum_{m=1}^{M} a_{km}^M Q(\lambda_m^{(t)})$, wherein $a_{km}^M$ are real coefficients and $k \leq M - 1$, wherein M is the total number of target noise strength values used in the method. I.e., given M target noise strength values, difference quotients up to order M-1 can be calculated. The number of non-zero coefficients $a_{km}^M$ may be related to the accuracy of the approximation for a given order k of the derivative. Note that the accuracy of the approximation also depends on the number M of noise scales. The difference quotient may be a forward, a backward or a central difference quotient in one example.

In one expedient example, the expansion value is the smallest target noise strength value associated with the smallest target noise level, in particular $\lambda_{m_e}^{(t)} = 1$. However, the invention is not limited to this, and the expansion value may be a noise strength value which is different from the smallest target noise strength value in certain examples.

In one example, the first error-mitigated target estimator value may be determined as the noise-reduced target estimator value associated with the expansion value and obtained for the optimal control parameter value, $E_{red}\left(\lambda_{m_e}^{(t)}, n_{op}\right)$.

In one example of the embodiment, the method may comprise calculating the zero-noise limit of the K-th Taylor polynomial, i.e., $T^{[K]}(0)$, and the optimal control parameter value may be determined such that $T^{[K]}(0) = E_{red}\left(\lambda_{m_e}^{(t)}, n_{op}\right)$. I.e., the sum of all higher order contributions of the K-th Taylor polynomial vanishes,

$$\sum_{k=1}^{K} \frac{\left(-\lambda_{m_e}^{(t)}\right)^k}{k!} E_{red}^{[k]}\left(\lambda_{m_e}^{(t)}, n_{op}\right) = 0.$$

In certain instances, the K-th Taylor polynomial needs not to be explicitly calculated, though. One particular example is the case when the noise-reduced target estimator values are a sum of the first and second contributions which are functions of the target and auxiliary estimator values for the target noise strength values and the assigned auxiliary noise strength values, respectively, and the model is linear in the control parameter, i.e.,

$E_{red}\left(\lambda_m^{(t)}, n\right) = P_1\left(E(\lambda_m^{(t)}, T), E(G\left(\lambda_m^{(t)}\right), A)\right) + nf(\lambda_m^{(t)}, E(G\left(\lambda_m^{(t)}\right), A), E(0, A))$ as introduced above.

In one particular example, $f\left(\lambda_m^{(t)}, E(G\left(\lambda_m^{(t)}\right), A), E(0, A)\right) = \log\left(\frac{E(0,A)}{E(G(\lambda_m^{(t)}),A)}\right)$. If the k-th difference quotients of the first contribution $P_1\left(E(\lambda_m^{(t)}, T), E(G\left(\lambda_m^{(t)}\right), A)\right)$, and the noise-canceling function f at the expansion value $\lambda_{m_e}^{(t)}$ are expressed as $P_1^{[k]}\left(E(\lambda_{m_e}^{(t)}, T), E(G\left(\lambda_{m_e}^{(t)}\right), A)\right) = \sum_{m=1}^{M} a_{km}^M P_1\left(E(\lambda_m^{(t)}, T), E(G\left(\lambda_m^{(t)}\right), A)\right)$ and

$f^{[k]}\left(\lambda_{m_e}^{(t)}, E(G\left(\lambda_{m_e}^{(t)}\right), A), E(0, A)\right) = \sum_{m=1}^{M} a_{km}^M f(\lambda_m^{(t)}, E(G\left(\lambda_m^{(t)}\right), A), E(0, A))$, respectively, the opti-

mal control parameter value may be calculated according to

$$n_{op} = -\frac{\sum_{m=1}^{M} V_m^K P_1\left(E(\lambda_m^{(t)}, T), E(G\left(\lambda_m^{(t)}\right), A)\right)}{\sum_{m=1}^{M} V_m^K f(\lambda_m^{(t)}, E\left(G(\lambda_m^{(t)}), A\right), E(0, A))}$$

wherein $V_m^K = \sum_{k=1}^{K} \frac{\left(-\lambda_{me}^{(t)}\right)^k}{k!} a_{km}^M$ . I.e., the optimal control parameter may be calculated from the values of the first contribution $P_1\left(E(\lambda_m^{(t)}, T), E(G\left(\lambda_m^{(t)}\right), A)\right)$ , the values of the noise-cancelling function

$f\left(\lambda_m^{(t)}, E\left(G(\lambda_m^{(t)}), A\right), E(0, A)\right)$, and the coefficients $a_{km}^M$ of the k-th difference quotients.

In one example, the noise-free auxiliary value may be provided as an input of the method. However, the method is not limited to this, and in one further embodiment, the method may comprise determining the noise-free auxiliary value wherein the determining comprises a classical simulation of the auxiliary quantum circuit at zero noise on a classical computer. Thereby, the noise-free auxiliary value may be determined as an exact value or an estimator value for the expectation value of the observable.

The method according to the present invention is configured to be applied to any target and auxiliary sets that are obtained for an execution of the target and auxiliary circuits, respectively, for each of the plurality of target and auxiliary noise strength values, respectively, each target (auxiliary) noise strength value being associated with one of the target (auxiliary) noise levels. In one embodiment of the method, the target and auxiliary quantum circuits may be error-corrected quantum circuits according to a quantum error correction code, and the execution of the target and auxiliary quantum circuits at the plurality of different noise levels may comprise their execution for a plurality of different code distances of the quantum error correction code. This method is called code distance scaling within this specification. Code distance scaling is disclosed, e.g., in M. Wahl et.al, "Zero noise extrapolation on logical qubits by scaling the error correction code distance", arXiv:2304.14985. In this way, the method according to the present invention may be applied to logically encoded qubits.

In a further embodiment of the present invention, the execution of the target and auxiliary quantum circuits at the plurality of different noise levels may comprise one of the following such as unitary folding on physical or logical qubits, local gate folding, noise amplification via pulse level control or probabilistic noise-amplification. Unitary folding and local gate folding are explained in more detail, for example in T. Giurgica-Tiron et.al, 2020 IEEE International Conference on Quantum Computing and Engineering (QCE), (IEEE, 2020). Noise amplification via pulse-level control comprises changing a duration of a control pulse used for an implementation of a quantum gate, see e.g. K. Temme et.al, Phys. Rev. Lett. 119, 180509 (2017) cited above. Probabilistic noise amplification is disclosed, for example in Y. Kim et.al, Nature 618,500 (2023).

The method according to the present invention is applicable to any target and auxiliary sets, irrespective of how these sets are obtained. That is, the target and auxiliary sets may be seen as an input of the method in one example. In particular, at least one, more than one or all method steps explained above may be implemented by a classical computer. However, the method is not limited to this, and in one further embodiment of the method according to the present invention, the method may further comprise executing the target and/or auxiliary quantum circuits by the quantum processor at each of the plurality of target and/or auxiliary noise levels to thereby obtain the target and/or auxiliary measurement data, respectively, and evaluating the target and/or auxiliary measurement data by the classical computer to thereby determine the target and/or auxiliary estimator values, respectively.

According to a second aspect of the present invention, there is provided a computer program product comprising instructions which, when the computer program product is executed by a classical computer, cause the classical computer to carry out the method according to any one of the above embodiments.

According to a third aspect of the present invention, there is provided a data carrier having stored thereon the computer program product according to the second aspect of the present invention.

In particular, the data carrier may be a non-transitory data carrier in one example.

According to a fourth aspect of the present invention, there is provided a computing system comprising a classical computer and a quantum processor, wherein

the quantum processor is configured to execute the target and auxiliary quantum circuits at each of the plurality of target and auxiliary noise levels to thereby obtain the target and auxiliary measurement data, respectively, wherein the classical computer is configured to evaluate the target and auxiliary measurement data to thereby determine the target and auxiliary estimator values, respectively, and

# EP 4 764 979 A1

wherein the classical computer is further configured to execute the computer program product according to the second aspect of the present invention.

Everything that was said above in relation to the method according to the first aspect of the present invention and the computer program product according to the second aspect of the present invention also applies to the computing system according to the fourth aspect of the present invention. The classical computer and the quantum processor may be located at the same location in one example. In another example, the quantum processor and the classical computer may be located at different locations. In one example, at least one of the quantum processor and the classical computer may be a cloud processor/computer.

In the following, the invention is described in more detail by way of example with reference to the Figures, in which

Fig. 1     is a schematic representation of a computing system according to the fourth aspect of the present invention;

Fig. 2     depicts a flowchart of method steps of a first embodiment of the method according to the first aspect of the present invention;

Fig. 3     depicts a flowchart of further method steps of a first example of the first embodiment of the method according to the first aspect of the present invention;

Fig. 4     depicts a flowchart of method steps of a second embodiment of the method according to the first aspect of the present invention;

Fig. 4a     depicts a flowchart of further method steps of a first example of the second embodiment of the method according to the first aspect of the present invention;

Fig. 4b     depicts a flowchart of further method steps of a second example of the second embodiment of the method according to the first aspect of the present invention;

Fig. 4c     depicts a flowchart of further method steps of a third example of the second embodiment of the method according to the first aspect of the present invention;

Fig. 5a     schematically depicts a system of ten qubits of a quantum processor of the computing system of the fourth aspect of the present invention and their connectivity;

Fig. 5b     depicts results of the method according to the first aspect of the present invention, wherein the target and auxiliary sets are obtained by a classical simulation of the execution of target and auxiliary quantum circuits on the qubits of the quantum processor of Fig. 5a;

Fig. 5c     depicts further results of the method according to the first aspect of the present invention, wherein the target and auxiliary sets are obtained by the classical simulation of the execution of the target and auxiliary quantum circuits on the qubits of the quantum processor of Fig. 5a;

Fig. 5d     depicts further results of the method according to the first aspect of the present invention, wherein the target and auxiliary sets are obtained by the classical simulation of the execution of the target and auxiliary quantum circuits on the qubits of the quantum processor of Fig. 5a;

Fig. 6a     schematically represents a system of five qubits of the quantum processor IQM Pyrite and their connectivity;

Fig. 6b     depicts results of the method according to the first aspect of the present invention, wherein the target and auxiliary sets are obtained by an execution of target and auxiliary quantum circuits on the five qubits of the IQM Pyrite quantum processor shown in Fig. 6a;

Fig. 6c     depicts further results of the method according to the first aspect of the present invention, wherein the target and auxiliary sets are obtained by an execution of the target and auxiliary quantum circuits on the five qubits of the IQM Pyrite quantum processor shown in Fig. 6a;

Fig. 6d     depicts further results of the method according to the first aspect of the present invention, wherein the target and auxiliary sets are obtained by an execution of the target and auxiliary quantum circuits on the five qubits of the IQM Pyrite quantum processor shown in Fig. 6a;

Fig. 7a-     depicts results for the ground state energy of the $H_4$ hydrogen chain estimated with
Fig. 7e     the method according to the second example of the second embodiment;

Fig. 7f-     depict the relative bias error B for the ground state energy of the $H_4$ hydrogen chain
Fig.7j     estimated with different error mitigation techniques;

Fig. 7k     schematically depicts a system of twenty qubits of the quantum processor IQM Garnet and their connectivity;

Fig. 7l     depicts results for the ground state energy of the $H_4$ hydrogen chain estimated with the method according to the third example of the second embodiment;

Fig. 7m     depicts results for the standard deviation of the ground state energy of the $H_4$ hydrogen chain shown in Fig. 7l.

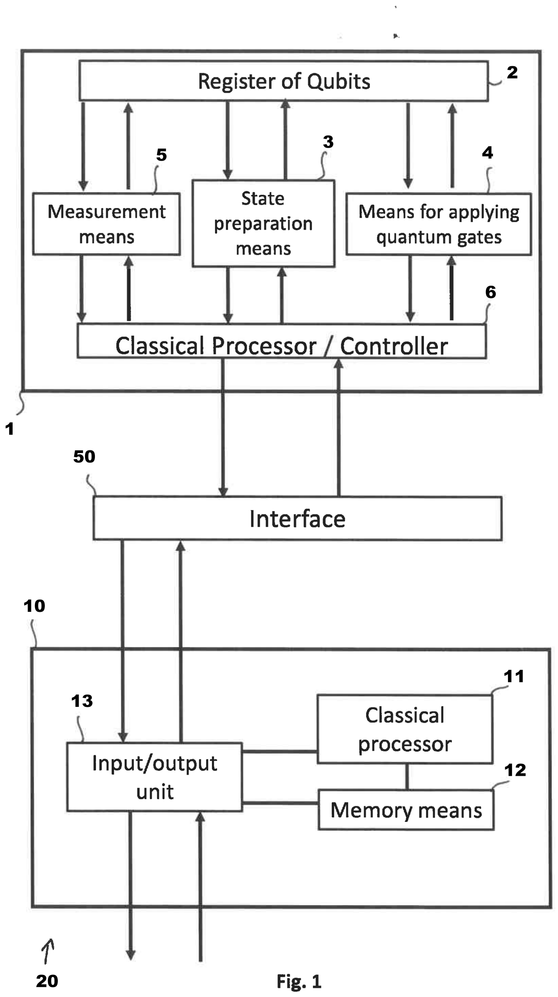

Fig. 1 depicts a schematic representation of a computing system 20 according to the fourth aspect of the present invention. The computing system 20 comprises a quantum processor 1 and a classical computer 10. Furthermore, the computing system 20 comprises an interface 50 interfacing the quantum processor 1 and the classical computer 10.

The classical computer 10 comprises a classical processor 11, memory means 12, and an input/output unit 13. A computer program is stored on the memory means 12 of the classical computer and the classical processor 11 is configured to execute the computer program stored on the memory means 12. The operation of the classical computer is based on operations on classical bits 0 and 1.

The classical computer 10 is configured to receive a user input via the input/output unit 13 in the form of classical data and to provide and receive data and/or instructions via the interface 50 to and from the quantum processor 1.

When the computer program is executed by the classical processor 11, the classical computer 10 prompts the user to provide an input required for the execution of the computer program stored on the memory means 12. The input comprises data specifying a target quantum circuit defined on the $N \leq N_{max}$ qubits and optionally at least one feature of a set of features comprising a noise scaling method, a plurality of target noise strength values, a plurality of auxiliary noise strength values, a method for deriving an auxiliary quantum circuit from the target quantum circuit, a number S of shots for the execution of the quantum circuits, and an observable. Those features which may not be selected by the user may be preset in the computer program stored on the memory means 12.

The instructions specifying the target quantum circuit comprise instructions specifying an initial target state of the N qubits, a target gate sequence, and a target measurement. The target quantum circuit is a quantum circuit of interest and configured to solve a computational problem of interest. Two examples of such problems will be presented below.

The noise scaling method may comprise at least one of unitary folding on physical or logical qubits, local gate folding, noise amplification via pulse level control, probabilistic noise amplification or code distance scaling. Recall that within this specification, code distance scaling refers to a scaling method for the case that the target and auxiliary quantum circuits are error-corrected quantum circuits according to a quantum error correction code, and the execution of the target and auxiliary quantum circuits at the plurality of different target and auxiliary noise levels comprises their execution for a plurality of different code distances of the quantum error correction code, respectively (see e.g. arXiv:2304.14985 cited above).

Each noise scale factor is associated with a noise level for the execution of the quantum circuit. Within the field of quantum error mitigation, the hardware base noise is in general associated with a noise strength value $\lambda = 1$. All other noise strength values are larger than 1. For ease of explanation, the target and auxiliary estimator values are equal in number and values in the following example, i.e., $\lambda_m^{(t)} = \lambda_m^{(a)} = \lambda_m$ for all m = 1, ..., M. For simplicity, $\lambda_m$ is denoted as noise strength value. The plurality of noise strength values comprises at least three noise strength values, i.e., $1 = \lambda_1 < \lambda_2 < ... < \lambda_M$, $M \geq 3$. In particular, M=3, 4, 5 or more in one example. The spacing between two consecutive noise strength values, $\lambda_{m+1} - \lambda_m$, may be the same or may be different from each other.

In one example, the computer program may comprise instruction which, when the computer program is executed by the classical processor 11, cause the classical processor 11 to derive an auxiliary quantum circuit from the target quantum circuit. The auxiliary quantum circuit comprises instructions specifying an auxiliary initial state, an auxiliary gate sequence, and an auxiliary measurement. In particular, the auxiliary initial state may be identical to the initial target state, and the auxiliary measurement may be identical to the target measurement. In the example, the auxiliary quantum gate sequence may be derived from the target gate sequence by replacing a fraction of about 80% of the non-Clifford gates or all non-Clifford gates by a Clifford gate, wherein the angle of the Clifford gate is selected to minimize the distance to the non-Clifford angle of the replaced non-Clifford gate. In this way, the noise-free execution of the auxiliary quantum circuit may be simulable on a classical computer. In some examples, the non-Clifford gates which are replaced by Clifford gates are randomly selected. However, the invention is not limited to this, and other ways to derive the auxiliary gate sequence from the target gate sequence may be envisioned. Furthermore, when the computer program is executed by the classical computer, instructions specifying the target and auxiliary quantum gate sequences and their implementation for the plurality of noise strength values are created. These instructions are then provided to the quantum processor 1 by the interface 50.

The quantum processor 1 comprises a register 2 of $N_{max} \geq 2$ qubits, state preparation means 3 configured to prepare a predetermined initial state, means 4 for applying quantum gates to the qubits of the register 2, and measurement means 5 configured to apply a quantum measurement to the qubits of the register 2. The qubits 2 of the quantum processor 1 may be any type of qubits, including, but not limited to superconducting qubits. Furthermore, the quantum processor 1 comprises a classical processor/controller 6 configured to receive instructions from the classical computer 10/interface 50. These instructions comprise instructions for the execution of the target and auxiliary quantum circuits for each of the plurality of different noise strength values.

The quantum processor 1 is configured to execute, by control of the controller 6, the target and auxiliary quantum circuits for the plurality of different noise strength values and the predetermined number of shots. The quantum measurement by the measurement means 4 results for each value $\lambda_m$ of the noise strength and each shot s of the S shots in associated target and auxiliary measurement outcomes, respectively. Thereby, target and auxiliary measurement data may be created which comprises for each noise strength value the associated target and auxiliary measurement outcomes, respectively. The target and auxiliary measurement data is provided via the interface 50 to the classical computer 10. The computer program is executed by the classical processor 11 to thereby evaluate the target and auxiliary measurement data and to determine for each noise strength value $\lambda_m$ the associated target and auxiliary estimator values E $(\lambda_m$, T), E $(\lambda_m$, A) for the expectation value of the observable O, respectively. (As mentioned above, the target and auxiliary noise strength values are equal in number and values in the example.) The quantum measurement is such that the target and auxiliary estimator values of the observable O may be obtained from the target and auxiliary measurement data, respectively. Furthermore, when the computer program is executed by the classical processor 11, the classical processor 11 simulates the execution of the auxiliary quantum circuit at zero noise to thereby determine the noise-free auxiliary value of the expectation value of the observable O, E (0, A), or its estimator value.

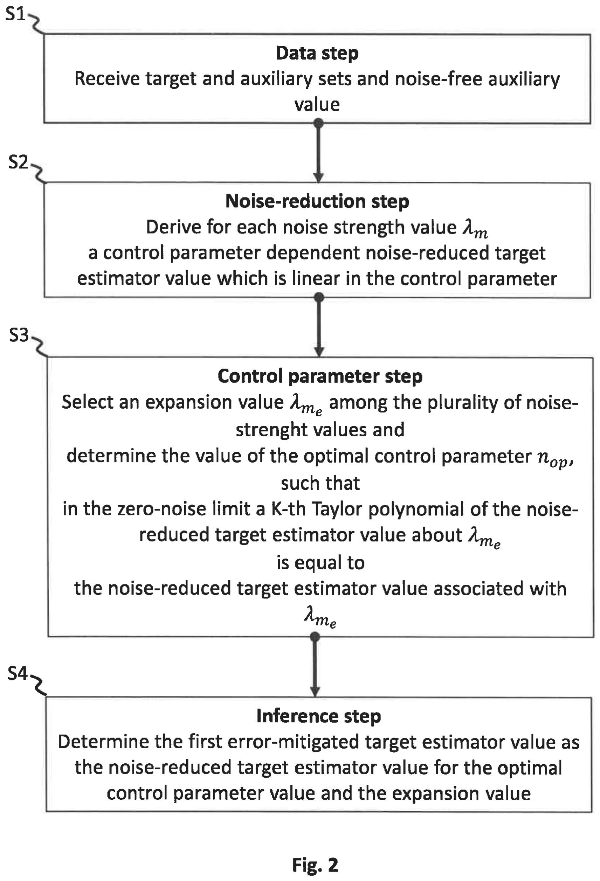

The computer program further comprises instructions, which, when the computer program is executed by the classical processor 11, cause the classical computer 10 to implement one of the embodiments and examples of the method according to the first aspect of the present invention explained in more detail below with reference to Figs. 2 to 6.

Fig. 2 depicts a flowchart of method steps of a first embodiment of the method according to the first aspect of the present invention. At step S1, target and auxiliary sets and the noise-free auxiliary value are received. The target set comprises for each of the plurality of noise strength values an associated target estimator value for the expectation value of the observable, and the auxiliary set comprises for each of the plurality of noise strength values an associated auxiliary estimator value for the expectation value of the observable. These sets may, e.g., be generated by the computing system 1 according to the second aspect of the present invention described above with reference to Fig. 1.

At step S2, a noise reduction step is implemented. In the noise reduction step, a control parameter dependent noise-reduced target estimator value is derived for each noise strength value $\lambda_m$. The noise-reduced target estimator value consists of first and second contributions and is of the following form:

$$E_{red}(\lambda_m, n) = P_1(E(\lambda_m, T), E(\lambda_m, A)) + P_2(\lambda_m, E(\lambda_m, A), n).$$

The first contribution is of the following form:

$$P_1\left(E(\lambda_m, T), E(\lambda_m, A)\right) = \frac{E(\lambda_m, T)}{E(\lambda_m, A)} E(0, A).$$

The second contribution is of the following form:

$$P_2\left(\lambda_m, E(\lambda_m, A), n\right) = nf\left(\lambda_m, E(\lambda_m, A), E(0, A)\right) = n \log\left(\frac{E(0, A)}{E(\lambda_m, A)}\right).$$

The noise-reduced target estimator value is linear in the real control parameter n. In the zero-noise limit, the noise-reduced target estimator value is equal to the target estimator value irrespective of the value of the control parameter, $E_{red}(0, n) = E(0, T)$.

The method proceeds with a control parameter step S3. In the control parameter step, an optimal control parameter value $n_{op}$ is determined. To this end, an expansion value $\lambda_{me}$ is selected among the plurality of the noise strength values. Then the optimal control parameter value $n_{op}$ is determined such that the zero noise limit of a K-th Taylor polynomial of the noise-reduced target estimator value in the noise strength about the expansion value, wherein derivatives are replaced by difference quotients which are expressed in terms of the noise-reduced target estimator value, is equal to the noise-reduced target estimator value associated with the expansion value. I.e., at the optimal control parameter value $n_{op}$ the sum of all higher order contributions of the K-th Taylor polynomial vanish in the zero-noise limit. As has been explained above in the general part of the description, an explicit calculation of the K-th Taylor polynomial is not necessary. Rather, the optimal control parameter value may be calculated according to

$$n_{op} = -\frac{\sum_{j=1}^{K} V_j^K P_1\left(E(\lambda_j, T), E(\lambda_j, A)\right)}{\sum_{j=1}^{K} V_j^K \log\left(\frac{E(0,A)}{E(\lambda_j, A)}\right)},$$

wherein

$$V_j^K = \sum_{k=1}^{K} \frac{(-\lambda_{m_e})^k}{k!} a_{kj}^M,$$

and the coefficients $a_{kj}^M$ are coefficients for calculating the k-th different quotients of the derivatives of the first contribution and the noise-cancelling function at the expansion value $\lambda_{m_e}$,

$$P_1^{[k]}\left(E(\lambda_{m_e}, T), E(\lambda_{m_e}, A)\right) = \sum_{j=1}^{K} a_{kj}^K P_1\left(E(\lambda_j, T), E(\lambda_j, A)\right) \qquad \text{and}$$

$$f^{[k]}\left(\lambda_{m_e}, E(\lambda_{m_e}, A), E(0, A)\right) = \sum_{j=1}^{K} a_{kj}^K f\left(\lambda_j, E(\lambda_j, A), E(0, A)\right) \qquad \text{with}$$

$$f\left(\lambda_j, E(\lambda_j, A), E(0, A)\right) = \log\left(\frac{E(0, A)}{E(\lambda_j, A)}\right)$$ . See the general part of the description above for more detail.

In particular, the expansion value $\lambda_{m_e}$ may be the smallest noise strength value of the plurality of noise strength values, and in particular $\lambda_{m_e} = 1$.

The method proceeds with the inference step at S4. There, the first error mitigated target estimator value $E_1(0, T)$ is determined as the noise-reduced target estimator value associated with the expansion value and obtained for the optimal control parameter value.

$$E_1(0, T) = E_{red}(\lambda_{m_e}, n_{op})$$

In one example of the first embodiment, the first error mitigated target estimator value $E_1(0, T)$ may be used as the final error-mitigated target estimator value of the method.

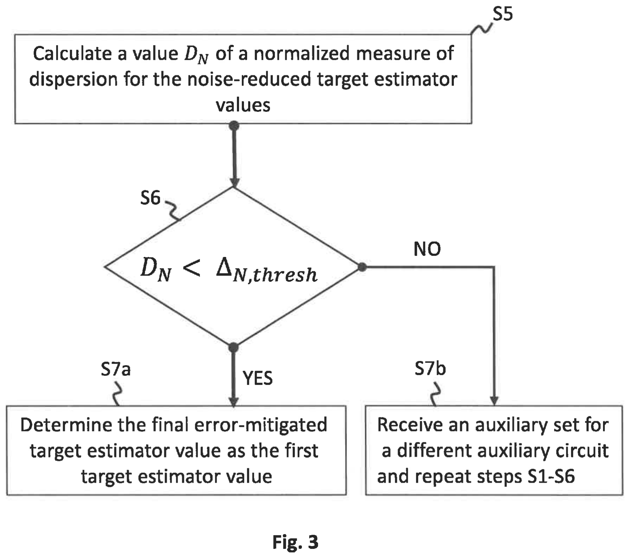

Fig. 3 depicts a flowchart of further method steps of a first example of the first embodiment of the method according to the first aspect of the present invention. The first example of the first embodiment comprises the steps S1 to S4 of the first embodiment shown in Fig. 2. After step S4 is completed, the method further comprises the steps S5 to S7a, b shown in Fig. 3.

At step S5, a value $D_N$ of a normalized measure of dispersion for the noise-reduced target estimator values is calculated. The value of the normalized measure of dispersion $D_N$ is defined as the quotient of a value of a first measure of dispersion $D_1$ for the noise-reduced target estimator values obtained for the optimal value of the control parameter and a value of the first measure of dispersion for the target estimator values, that is

$$D_N = \frac{D_1\left(\{E_{red}(\lambda_m, n_{op})\}_{m=1}^{M}\right)}{D_1\left(\{E(\lambda_m, T)\}_{m=1}^{M}\right)}.$$

$D_1$ is the first measure of dispersion, and may be, for example, the variance, the standard deviation or the mean absolute difference. $\{E_{red}(\lambda_m, n_{op})\}_{m=1}^{M}$ denotes the set of the noise-reduced target estimator values for the plurality of different noise strength values and obtained for the optimal control parameter value. $\{E(\lambda_m, T)\}_{m=1}^{M}$ denotes the set of the target estimator values for the plurality of different noise strength values.

The method proceeds to step S6, where it is verified, whether the value $D_N$ of the normalized measure of dispersion is smaller than a threshold value $\Delta_{N, thresh}$. Preferably, the threshold value $\Delta_{N, thresh}$ is smaller than or equal to 0.4, preferably smaller than or equal to 0.3, more preferably smaller than or equal to 0.2, and most preferably smaller than or equal to 0.1. In general, one may expect better results than ZNE whenever the threshold value $\Delta_{N, thresh}$ is smaller than or equal to 1. If the outcome of the verification step S6 is YES, the method proceeds to step S7a, where the final error mitigated target estimator value is determined as the first error mitigated target estimator value $E_1(0, T)$. If the outcome of the verification step S6 is NO, the method proceeds to S7b. There, an auxiliary set for a different auxiliary circuit is received, and steps S1 to S6 are repeated until the threshold criterion in step S6 is fulfilled.

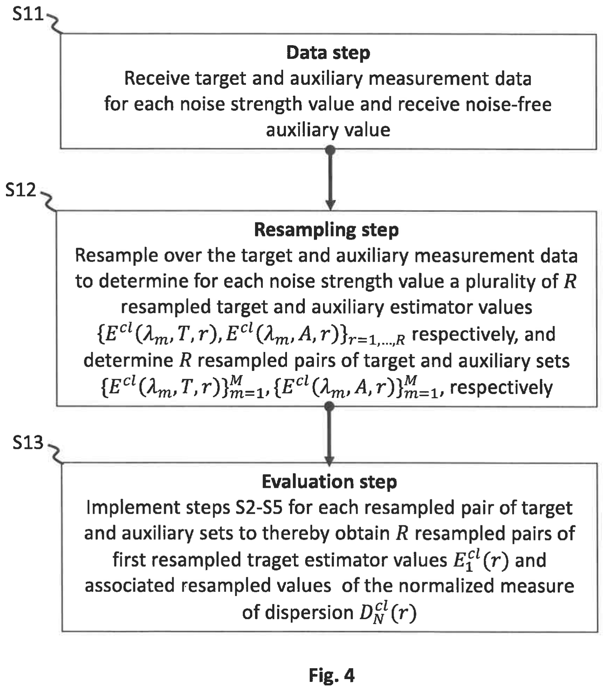

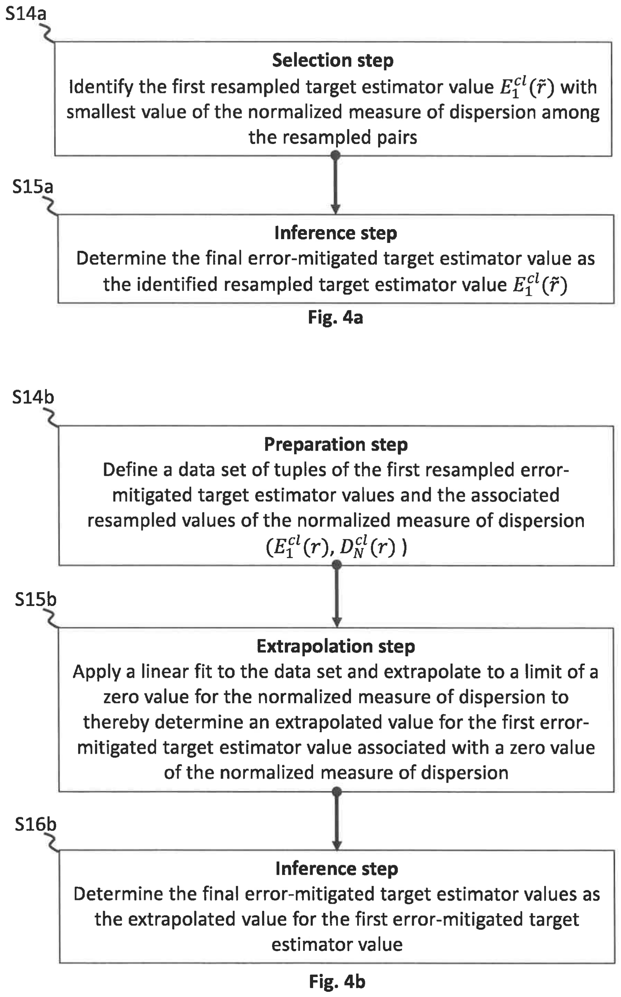

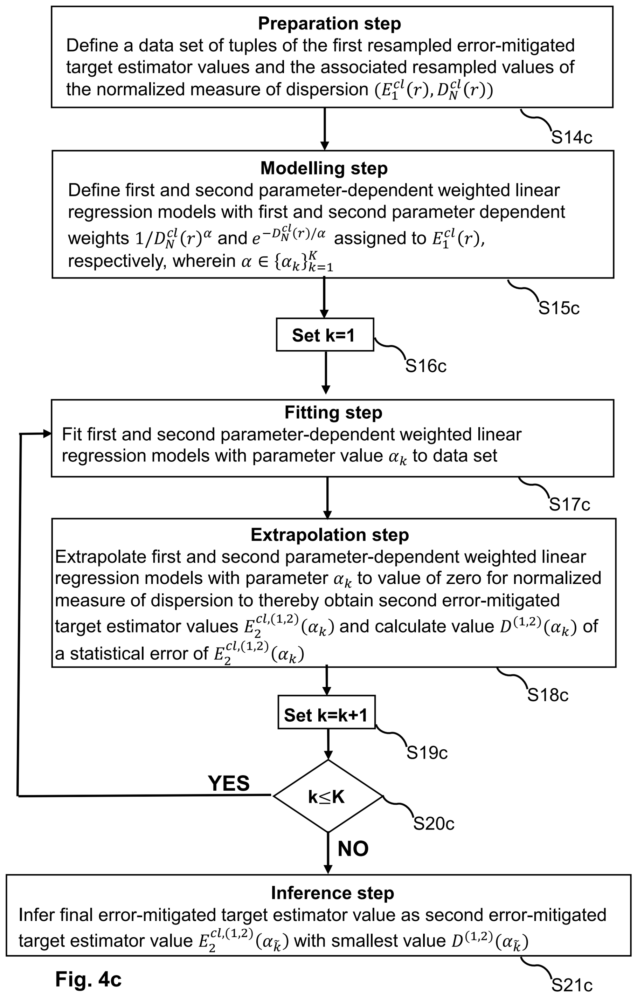

Fig. 4 depicts a flowchart of method steps of a second embodiment of the method according to the first aspect of the present invention. The method starts at step S11 with the receiving of target and auxiliary measurement data for each noise strength value $\lambda_m$. As explained above, the target measurement data may be obtained by execution of the target quantum circuit by the quantum processor at each of the different noise levels, and the auxiliary measurement data may be obtained by an execution of the auxiliary quantum circuit at the plurality of different noise levels. Furthermore, the noise-free auxiliary value is received. The noise-free auxiliary value may be obtained by a simulation of the noise-free execution of the auxiliary quantum circuit on the classical computer 10.

The method proceeds to step S12. At S12, it is resampled over the target and auxiliary measurement data to thereby determine for each noise strength value a plurality of R resampled target and auxiliary estimator values $E^{cl}(\lambda_m, T, r)$, $E^{cl}(\lambda_m, A, r)$ r = 1, ..., R, respectively. In this way, R resampled pairs of target and auxiliary sets, $\{E^{cl}(\lambda_m, T, r)\}_{m=1}^{M}$, $\{E^{cl}(\lambda_m, A, r)\}_{m=1}^{M}$, respectively, may be created.

Then, the method proceeds to step S13, where steps S2 to S5 shown in Figs. 2 and 3 are implemented for each resampled pair of target and auxiliary sets. Thereby, R resampled pairs of first target estimator values $E_1(r)$ and associated values of the normalized measure of dispersion $D_N(r)$ are obtained.

The final error mitigated target estimator value of the second embodiment may now be obtained either according to the method steps of a first example illustrated in Fig. 4a, according to method steps of a second example shown in Fig. 4b or according to method steps of a third example illustrated in Fig. 4c.

The first example of the second embodiment of the method according to the first aspect of the present invention comprises the method steps S11 to S13 shown in Fig. 4 and the further method steps S14a and S15a shown in Fig. 4a. At step S14a which follows step S13, the first resampled target estimator value $E_1{}^{cl}(\bar{r})$ with the smallest value of the normalized measure of dispersion among the resampled pairs is identified. Then in step S15a, the final error mitigated target estimator value is determined as the identified resampled target estimator value $E_1{}^{cl}(\bar{r})$. Thereby, the accuracy of the final error mitigated target estimator value may be improved.

Alternatively, the final error mitigated target estimator value may be determined according to the method of a second example of the second embodiment. The second example of the second embodiment comprises the method steps S11 to S13 of the second embodiment shown in Fig. 4. Subsequent to step S13, the second example comprises method steps S14b to S16b shown in Fig. 4b.

At step S14b, a data set of tuples of the first resampled error mitigated target estimator values and the associated resampled values of the normalized measure of dispersion is defined $(E_1(r), D_N(r))$. In one expedient example, the data set comprises all resampled first resampled target estimator values and the associated resampled value of the normalized measure of dispersion.

At step S15b, a linear fit is applied to the data set and is extrapolated to a limit of a zero value for the normalized measure of dispersion to thereby determine an extrapolated value for the first error mitigated target estimator value associated with a zero value of the normalized measure of dispersion.

The method finishes at step S16b, where the final error mitigated target estimator value is determined as the extrapolated value for the first error mitigated target estimator value.

The third example of the second embodiment of the method according to the first aspect of the present invention comprises the method steps S11 to S13 shown in Fig. 4. Subsequent to step S13, the third example comprises method steps S14c to S21c shown in Fig. 4c.

At step S14c, a data set of tuples of the first resampled error-mitigated target estimator values and the associated resampled values of the normalized measure of dispersion is defined $E_1^{cl}(r), D_N^{cl}(r))$, r=1,..., R. In one expedient example, the data set comprises all resampled first error-mitigated target estimator values and the associated resampled values of the normalized measure of dispersion.

At step S15c, a first parameter-dependent weighted linear regression model with a first parameter dependent weight $1/D_N^{cl}(r)^\alpha$ assigned to $E_1^{cl}(r)$, r=1,..., R, and a second parameter-dependent weighted linear regression model with a second parameter dependent weight $e^{-D_N(r)/\alpha}$ assigned to $E_1^{cl}(r)$, r=1,..., R, is defined. In one example, the regression model is a linear regression model. The parameter $\alpha$ may take parameter values within the set $\{\alpha_k\}_{k=1}^{K}$, wherein K≥2.

At step S16c, the index k of the parameter values is set to k=1.

At step S17c, each of the first and second parameter-dependent weighted linear regression models with parameter value $\alpha_k$ is fitted to the data set.

At step S18c, the first and second parameter-dependent weighted linear regression models with parameter $\alpha_k$ are extrapolated to a value of zero for the normalized measure of dispersion, e.g., by extrapolation to thereby obtain a second error-mitigated target estimator value $E_2^{cl,(1)}(\alpha_k)$ for the first model and a second error-mitigated target estimator value $E_2^{cl,(2)}(\alpha_k)$ for the second model. I.e., the second error-mitigated target estimator value is the estimated value of the resampled first error-mitigated target estimator for the value of zero for the resampled normalized measure of dispersion. A value $D^{(1,2)}(\alpha_k)$ of a statistical error of $E_2^{cl,(1,2)}(\alpha_k)$ is calculated. In one example the statistical error is a function of or is equal to the variance, the standard deviation or the mean absolute difference. In another example, the statistical error of the second error-mitigated target estimator value may be a function of or may be equal to the ratio of the variance, the standard deviation or the mean absolute difference of the second error-mitigated target estimator value and the variance, the standard deviation or the mean absolute difference of the target estimator values. Note that in other examples a single parameter-dependent weighted regression model may be used (e.g., only the first model or only the second model) instead of the two models.

At step S19c, the index of the parameter values is increased by one, and it is verified at step S20c whether the index of the parameter value is at most K. If the answer is YES, the method returns to step S17c.

If the answer is NO, the method proceeds to step S21c. There, the final error-mitigated target estimator value is inferred as the second error-mitigated target estimator value $E_2^{cl,(1)}(\alpha_{\tilde{k}})$ for the first model or the second error-mitigated target estimator value $E_2^{cl,(2)}(\alpha_{\tilde{k}})$ for the second model so that the associated value of the statistical error $D^{(1)}(\alpha_k)$ or $D^{(2)}(\alpha_k)$ is the smallest value among the values of the statistical error. If only a single model is used, the final target estimator value may be inferred as the second error-mitigated target estimator value with the smallest statistical error for this model.

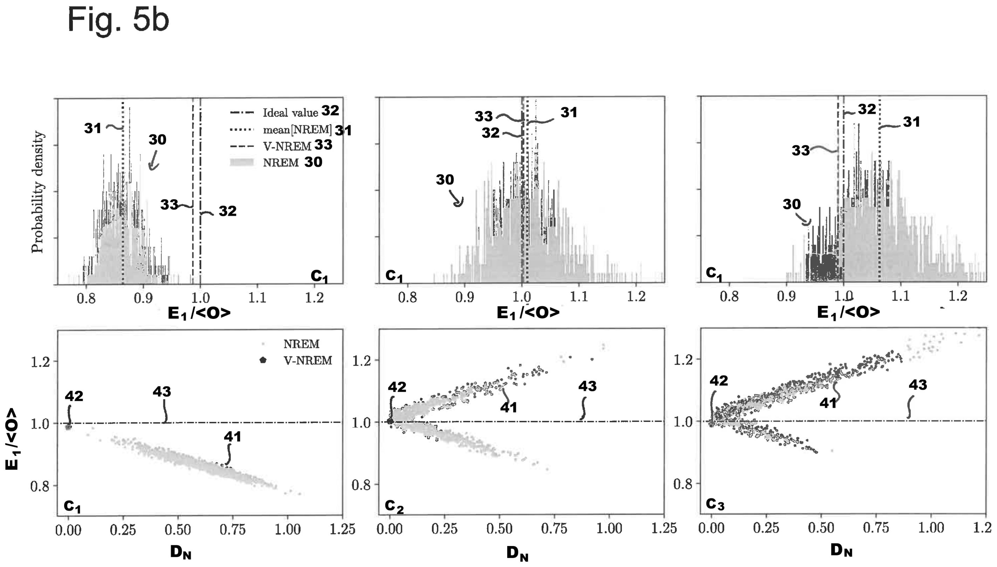

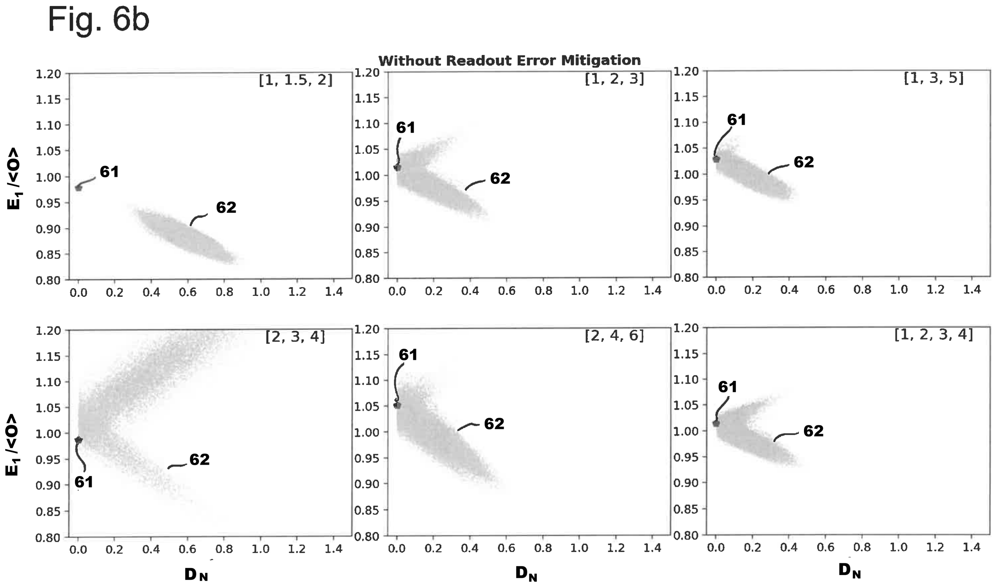

In the following, results of the method according to the first aspect of the present invention for mitigating the error caused by noise in an execution of a specific target quantum circuit will be presented. The target quantum circuit T is a QAOA (Quantum Approximate Optimization Algorithm)-type quantum circuit configured to determine the ground state of a transverse Ising model Hamiltonian $H = -g \sum_j \sigma_x^{(j)} - \sum_{<j,j'>} \sigma_z^{(j)} \sigma_z^{(j')}$, wherein $\sigma_X^{(j)}$ is the Pauli X-matrix acting on the qubit j, $\sigma_Z^{(j)}$ is the Pauli Z-matrix acting on qubit j, and $\sigma_z^{(j)} \sigma_z^{(j')}$ is a coupling term between connected qubits j and j' of the quantum processor. All results are obtained for the case of g=2. The target quantum circuit comprises a target gate sequence comprising single-qubit rotations around the X, Y and Z axis and controlled-Z operations and a measurement in the Z-basis. The target measurement results in target measurement data which allows to calculate an estimator value of an expectation value of the ground state energy of the transverse Ising model, which is the observable in the present example. The auxiliary quantum circuit has the same initial state and the same quantum measurement as the target quantum circuit. The results shown in Figs. 5b-5d are obtained by using three different auxiliary quantum circuits $C_1$, $C_2$, $C_3$, wherein the auxiliary gate sequence of each auxiliary quantum circuit $C_1$, $C_2$, $C_3$ is derived from the target gate sequence of the target quantum circuit by replacing a fraction of 80% of the non-Clifford gates which are randomly selected by the closest Clifford gate as explained above. The results shown in Figs. 6b-6d are obtained by using the auxiliary quantum circuit $C_4$, which is derived from the target quantum circuit by replacing every non-Clifford gate of the target quantum circuit by the closest Clifford gate as explained above.

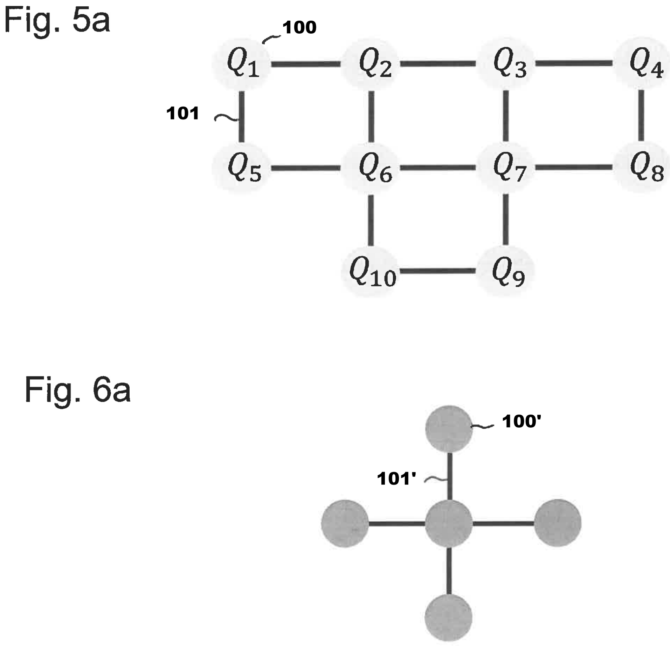

In the following, a first example and its results are presented with reference to Figs. 5a to 5d. Fig. 5a schematically represents a register of 10 qubits 100 of a quantum processor 1. Pairs of qubits of the quantum processor 1 have connectivity when there is a connecting line 101 between the qubits of the pair in Fig. 5a. The target quantum circuit is the transverse field Ising Hamiltonian presented above with <j, j'> denoting pairs of connected qubits. To arrive at the results of Figs. 5b to 5d, the executions of the target and auxiliary quantum circuits were simulated on a classical computer using a noise model with parameters specifically tailored to superconducting based quantum processors. The noise model includes $T_1$ and $T_2$ times. In addition, the noise model includes excited state population for individual qubits as well as additional depolarizing noise for single- and two-qubit gates. As the error mitigation method, the method according to the second example of the second embodiment of the method of the present invention explained above with reference to Figs. 4 and 4b is used (bootstrapping and linear fit). We denote this method as V-NREM in the following. The noise strength values $\lambda_m$ = 1, 1.5, 2 are used for the (simulated) execution of the target and auxiliary quantum circuits. The first resampled error-mitigated target estimator values are denoted by $E_1(r)$, wherein r is a resampling index. The exact target estimator value is denoted by <O>.

The results shown in Fig. 5b are obtained for S = $30 \cdot 10^4$ shots for the execution of the target and auxiliary quantum circuits for each value of the noise strength and for R = 1,000 samples of the bootstrapping method. The upper panel of Fig. 5b shows probability densities for a renormalized first error-mitigated target estimator value which is the first resampled target estimator value divided by the exact expectation value of the ground state energy, $E_1/<O>$ of the transverse Ising model for the three different auxiliary quantum circuits $C_1$, $C_2$, $C_3$ introduced above (80 % of non-Clifford gates of the target quantum circuit replaced by closest Clifford gates), (left upper panel: $C_1$, middle upper panel: $C_2$, and right upper panel: $C_3$). NREM 30 denotes the results for the first resampled target estimator values. The dotted line 31 denotes the mean value of the NREM method, the dashed-dotted line 32 denotes the ideal value. The dashed line 33 denotes the renormalized final error-mitigated target estimator value determined by use of the data presented in the respective lower panels of Fig. 5b.

The three lower panels of Fig. 5b each depict for each of the three auxiliary quantum circuits (left lower panel: $C_1$, middle lower panel: $C_2$, right lower panel: $C_3$) a data set 41 which comprises for each resampling index r the resampled value of the normalized measure of dispersion $D_N$ and the associated resampled first error mitigated target estimator value $E_1(r)$ divided by the exact expectation value of the ground state energy, $E_1/<O>$. A linear fit is applied to the data set to thereby extrapolate to the limit of zero for the value of the normalized measure of dispersion to thereby infer the final error mitigated target estimator value 42. The exact value for the renormalized final error mitigated target estimator value is depicted by the dashed-dotted line 43.

Fig. 5b illustrates that the final error mitigated target estimator value obtained from the extrapolation is closer to the exact value of the ground state energy irrespective of the choice of the auxiliary quantum circuit.

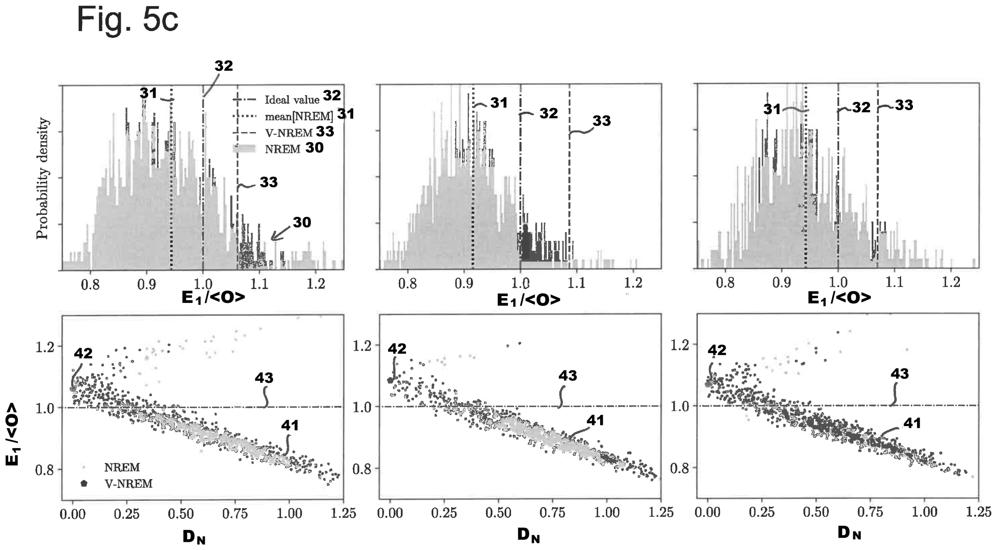

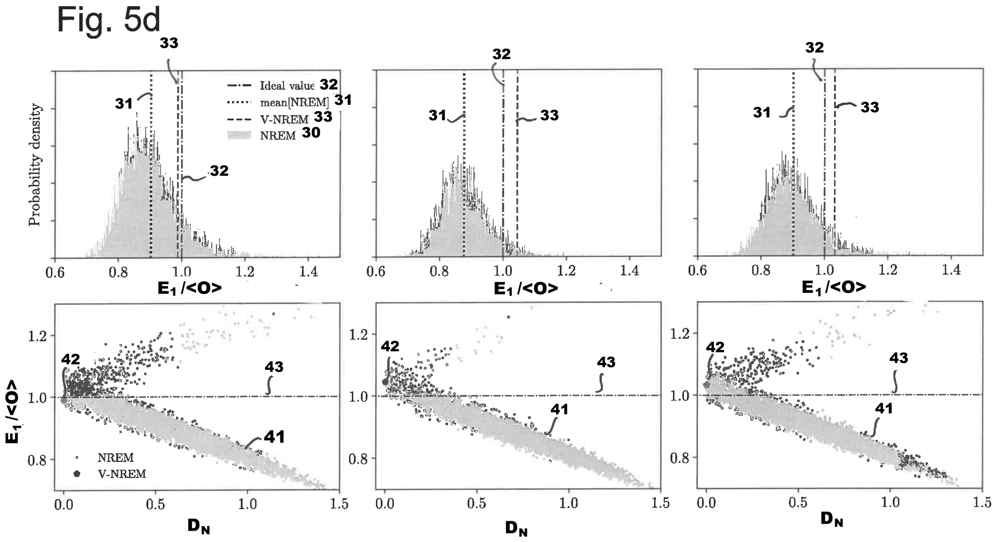

Figs. 5c and 5d are similar to Fig. 5b (i.e. the results are obtained for the auxiliary quantum circuits $C_1$, $C_2$, $C_3$ mentioned above; left upper and lower panels $C_1$, middle upper and lower panels $C_2$, right upper and lower panels $C_3$) but are obtained for different values of the total number of shots and for different values of the number of samples of the bootstrapping. In Fig. 5c, the same number of bootstrapping samples as in Fig. 5b, that is R = 1,000, is used. However, the number of shots is one fifth compared to the number shots for the plots shown in Fig. 5b, that is, the number S of shots is $6 \cdot 10^4$. One may understand from Figs. 5b and 5c, that a reduction of the number of shots leads to a less accurate result of the final error mitigated target estimator value, as one may expect.

In Fig. 5d, the same number of shots as in Fig. 5c, that is $S = 6 \cdot 10^4$, is used. However, the number of samples in the bootstrapping is five times as much as the number of bootstrappings in Fig. 5b and 5d, that is, R = 5,000. As one may take from a comparison of Figs. 5b, 5c, and 5d, the accuracy of the final error mitigated target estimator values is close to the accuracy of the ones obtained in Fig. 5b with $S = 30 \cdot 10^4$ shots. That is, by increasing the number of samples of the bootstrapping method, the number of shots in the execution of the quantum circuit may be reduced. Thereby, quantum resources may be saved when classical bootstrapping is applied.

In the following, a second example and its results are explained with reference to Figs. 6a to 6d. Fig. 6a schematically illustrates a register of 5 qubits 100' of the IQM quantum processor Pyrite. There is a connecting line 101' between pairs of qubits of the quantum processor which have connectivity.

The target quantum circuit is the transverse field Ising Hamiltonian presented above, wherein <j, j'> denotes pairs of qubits having connectivity in Fig. 6a.

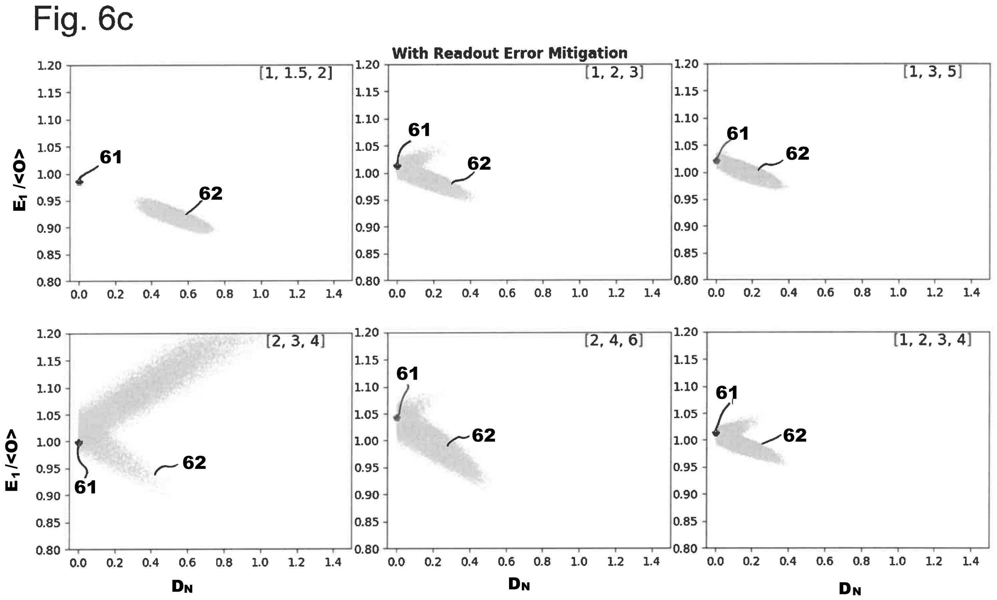

Fig. 6b and Fig. 6c show results similar to those presented in the lower panels of Figs. 5b and 5d and show results for different choices of the plurality of noise strength values. The noise strength values are indicated in the square brackets at the right upper corner of each graph. Each graph is created by use of the auxiliary quantum circuit $C_4$ introduced above (100 % of the non-Clifford gates of the target quantum circuit replaced by closest Clifford gates). Fig. 6b shows results without readout error mitigation, while additional readout error mitigation is applied to obtain the results shown in Fig. 6c. Readout error mitigation is explained, for example, in P.D. Nation et al., "Scalable mitigation of measurement errors on quantum computers", PRX Quantum 2, 040326 (2021). The results are obtained with bootstrapping, wherein the number of bootstraps is R = 10.000. The final error mitigated target estimator value 61 is obtained by a linear fit to the data set 62 and by extrapolating the linear fit to the limit of a zero value for the normalized measure of dispersion.

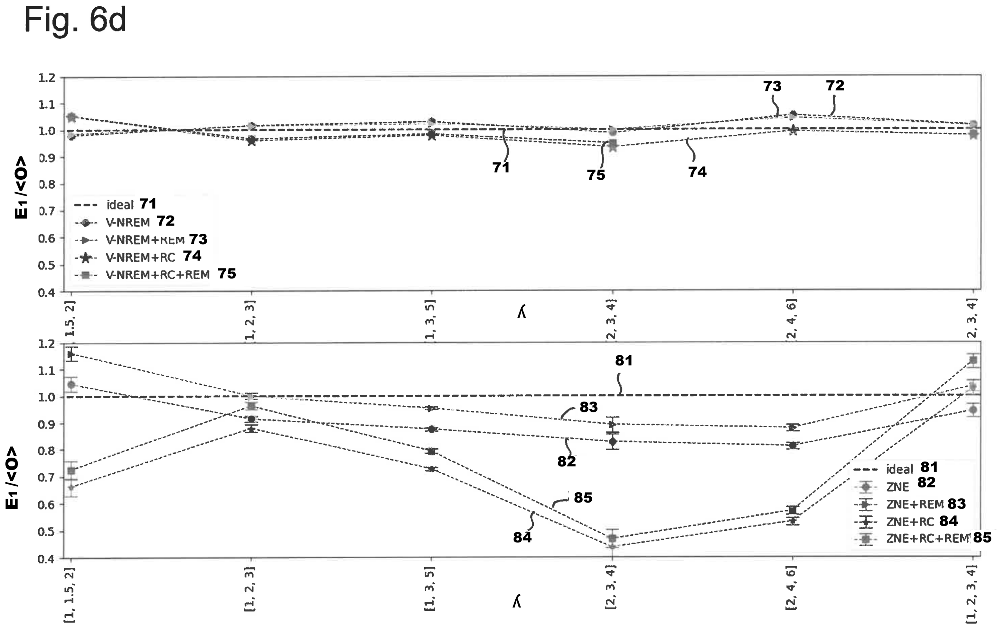

Fig. 6d is a comparison between various error mitigation methods. The above panel depicts results obtained for the method according to V-NREM with bootstrapping, and the panel below shows results obtained for Zero Noise Extrapolation (ZNE). In the panels, REM denotes additional readout error mitigation, and RC denotes additional randomized compiling. Randomized compiling is explained, for example, in A. Hashim et al., "Randomized compiling for scalable quantum computing on a noisy superconducting quantum processor", Physical Review X 11, 041039 (2021). The final error mitigated target estimator value is normalized by dividing it by the exact expectation value of the ground state energy of the transverse Ising model. The noise strength values used for deriving the plots are presented on the X-axis in square brackets. As one may take from Fig. 6d, the method according to the present invention results in final error mitigated target estimator values with an improved accuracy compared to ZNE irrespective of the choice and the spacing of the noise strength values and irrespective of the application of other error mitigation techniques like readout error mitigation or randomized compiling. Furthermore, one may take from the upper panel of Fig. 6d that the method according to the present invention is a very powerful method which does not necessarily require further error mitigation techniques like REM or RC to improve the accuracy of the final error-mitigated target estimator value.

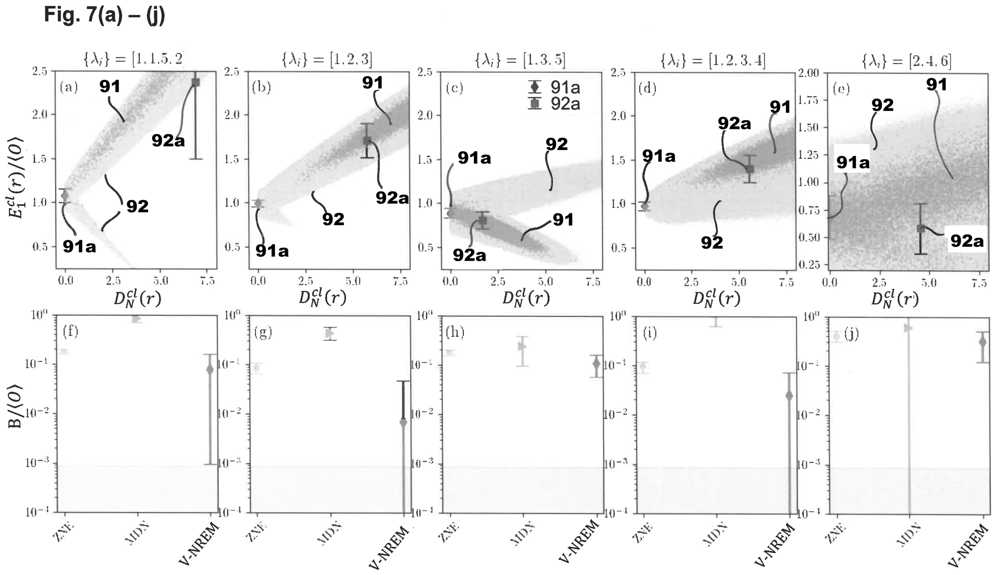

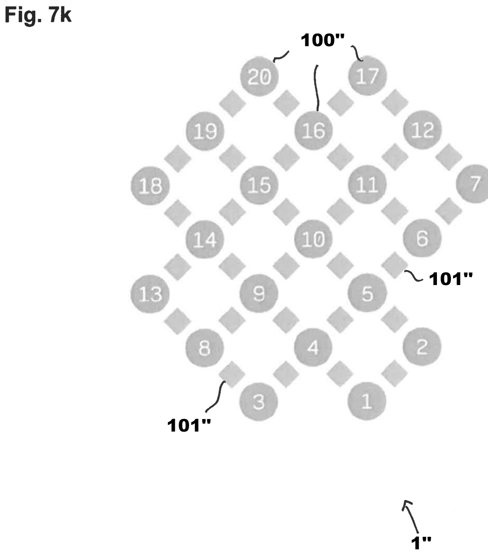

In the following, a third example and its results are presented with reference to Figs. 7a to 7m. Fig. 7k schematically represents a register of 20 qubits 100" of IQM's quantum processor 1" Garnet with a square grid connectivity. Pairs of qubits 100" of the quantum processor 1" have connectivity when there is a thick connecting line 101" between the qubits 100" of the pair of qubits in Fig. 7k. For the third example, target and auxiliary measurement data is obtained by executing target and auxiliary quantum circuits at a plurality of difference noise strength values by Garnet. The target quantum circuit is configured for approximating the ground state energy of the $H_4$ chain with an interatomic distance of 1.0 Å. The minimal STO-3G chemical basis set is used and the fermionic system is encoded into 8 qubits through the Jordan Wigner transformation. The target quantum circuit is a classically pre-trained variational quantum eigensolver (VQE) circuit using the unitary paired coupled cluster singles and doubles ansatz (UpCCSD). The transpiled target circuit depth for computing the energy ranges between 132 and 164 in depth, corresponding to 89 and 169 entangling CZ gates.

The results depicted in Fig. 7a - j are obtained by use of the error mitigation method according to the second example of the second embodiment of the method according to the present invention as explained above with reference to Figs. 4 and 4b (bootstrapping and linear fit, called V-NREM). For each figure, different sets of noise strength values are used. The plots in Figs. 7(a) - 7(e) show results for a renormalized first error-mitigated target estimator value which is the resampled first error-mitigated target estimator value $E_1^{cl}(r)$ divided by the exact value <O> for the ground state energy, $E_1^{cl}(r)/$<O> , against the resampled normalized measure of dispersion $D_N^{cl}(r)$ obtained by first and second bootstrapping approaches 91, 92 (see A. Hosseinkhani et al, "Noise-robus estimation of Quantum Observables in Noisy Hardware", arxiv:2503.06695v1 for details). The figures also show the final error-mitigated target estimator value 91a, 91b obtained by fitting the results 91, 92, respectively, to a linear regression model with weights $1/\,D_N^{cl}(r)$ and extrapolating the linear regression model to the limit of zero for the value of the normalized measure of dispersion. For the noise strength values of Figs. 7(a), (b) and (d), the correct energy is recovered within the stated error bars of around~ 10% of the ratio between the extrapolated first error-mitigated target estimator values and the exact VQE values. Both, the most accurate (0.2% error) and precise (~ 3% error bar) result are obtained for the case A = [1, 2, 3] case (Fig. 7(b)), which lies close to the chemical precision of 0.00159 Ha of the VQE result.

Figs. 7f - 7j depict the relative bias error B of the estimated ground state energy (normalized by the exact value of the ground state energy <O>) for different error mitigation techniques. The noise scale factors are as in Figs. 7a-7e above. ZNE is the standard zero noise extrapolation, MND is the method disclosed in M. Urbanek et. al, Phys. Rev. Lett. 127, 270502 (2021) and V-NREM is the method used to obtain Figs. 7(a) - 7(e).

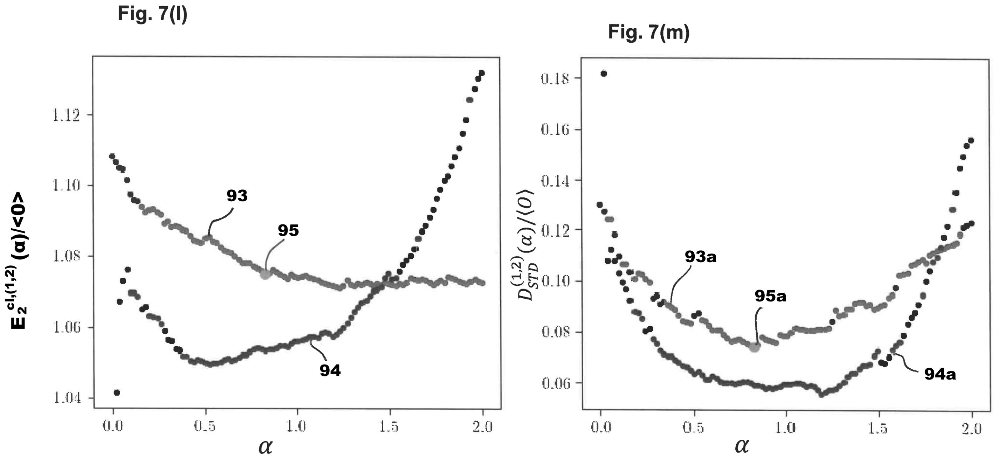

Figs. 7l and 7m are obtained with the error mitigation method according to the third example of the second embodiment explained with reference to Fig. 4c by using the same data as for Fig. 7b. To obtain the plots, first and second parameter-dependent weighted linear regression models with first and second parameter dependent weights $1/D_N^{cl}(r)^\alpha$ and $e^{-D_N^{cl}(r)/\alpha}$ , respectively, assigned to $E_1^{cl}(r)$ are defined. For each parameter value $\alpha_k \in [0,2]$ of a plurality of parameter values $\{\alpha_k\}_{k=1}^K$ the first and second parameter-dependent weighted linear regression models with parameter value $\alpha_k$ are fitted to the data set of tuples of the first resampled error-mitigated target estimator values and the associated resampled values of the normalized measure of dispersion $(E_1^{cl}(r),\, D_N^{cl}(r))$. The fitted first and second parameter-dependent weighted linear regression models with parameter $\alpha_k$ are extrapolated to a value of zero for the normalized measure of dispersion to thereby determine the second error-mitigated target estimator value $E_2^{cl(1)}(\alpha_k)$ and $E_2^{cl(2)}(\alpha_k)$ for the first and second models, respectively.

Fig. 7l depicts the second error-mitigated target estimator values $E_2^{cl(1,2)}(\alpha_k)$ for the first and second models divided by the exact value <O> for the ground state energy for the different values of the parameter $\alpha$ for the first model (reference sign 93) and the second model (reference sign 94), as well as the V-NREM result (reference sign 95) of Fig. 7b. As one may take from Fig. 7l, the parameter-dependent weighted regression models allow to infer a more accurate result for the ground state energy.

Fig. 7m depicts the value $D_{STD}^{(1,2)}(\alpha)$ of the standard deviation of $E_2^{cl(1,2)}(\alpha_k)$ for the different values of the parameter $\alpha$ for the first model (reference sign 93a) and the second model (reference sign 94a) as well as for the V-NREM result (95a) of Fig. 7b. As one may take from Fig. 7m, the embodiment allows further reducing the standard deviation of the ground state energy by an appropriate choice of the weights for the linear regression.

**Claims**

1. A method for mitigating errors caused by noise in a target quantum circuit executed by a quantum processor (1) on the basis of a target set comprising for each of a plurality of target noise strength values an associated target estimator value for an expectation value of an observable, an auxiliary set comprising for each of a plurality of auxiliary noise strength values an associated auxiliary estimator value for an expectation value of the observable, and a noise-free auxiliary value for an expectation value of the observable, the plurality of target estimator values being determined by evaluation of target measurement data obtained by an execution of the target quantum circuit by the quantum processor (1) at a plurality of different target noise levels, each target noise level being associated with one of the target noise strength values, the plurality of auxiliary estimator values being determined by evaluation of auxiliary measurement data obtained by an execution of an auxiliary quantum circuit different from the target quantum circuit by the quantum processor (1) at the plurality of different auxiliary noise levels, each auxiliary noise level being associated with one of the auxiliary noise strength values, and the noise-free auxiliary value being the expectation value of the observable for a fictitious noiseless execution of the auxiliary quantum circuit or an estimator value thereof, said method comprising:

> a noise-reduction step of deriving for each target noise strength value a noise-reduced target estimator value comprising first and second contributions, wherein the first contribution is derived by reducing a noise-dependency of the target estimator values on the basis of a noise-dependency of the auxiliary estimator values and the noise-free auxiliary value, and the second contribution is configured to further reduce a remaining noise-dependency of the first contribution and is derived by use of a control parameter-dependent model for the remaining noise-dependency on the basis of the auxiliary estimator values and the noise-free auxiliary value;
> a control parameter step of determining an optimal value of the control parameter such that the noise-dependency of the noise-reduced target estimator values fulfills a minimization criterion;
> an inference step of inferring a first error-mitigated target estimator value on the basis of the noise-reduced target estimator values with the optimal control parameter value.

2. Method according to claim 1, wherein the inference step further comprises:

> calculating a value of a normalized measure of dispersion for the noise-reduced target estimator values with the optimal control parameter value, the value of the normalized measure of dispersion being indicative of a ratio of a value of a first measure of dispersion for the noise-reduced target estimator values with the optimal control parameter value and a value of the first measure of dispersion for the target estimator values;
> and wherein the value of the normalized measure of dispersion is used to determine a final error-mitigated target estimator value.

3. Method according to claim 2, wherein said method further comprises:
verifying whether the value of the normalized measure of dispersion is below a predetermined threshold value and accepting or rejecting the first error-mitigated target estimator value as the final error-mitigated target estimator value depending on the outcome of the verification.

4. Method according to claim 2, wherein said method further comprises:

> resampling over the target and auxiliary measurement data for each target and auxiliary noise strength value, respectively, according to a resampling method, the resampling method being preferably a bootstrapping method, to thereby generate a plurality of resampled target and auxiliary sets, each comprising for every target and auxiliary noise strength value resampled target and auxiliary estimator values, respectively, and selecting a plurality of pairs of resampled target and auxiliary sets;
> applying the noise-reduction step, the control parameter step, and the inference step to each selected pair of resampled target and auxiliary sets to thereby obtain for each resampled pair a resampled first error-mitigated target estimator value and a resampled value of the normalized measure of dispersion;
> and wherein the final error-mitigated target estimator value is inferred on the basis of the resampled first error-mitigated target estimator values and the associated resampled values of the normalized measure of dispersion.

5. Method according to claim 4, wherein
inferring the final error-mitigated target estimator value is on the basis of the resampled first error-mitigated target estimator value with the smallest resampled value of the normalized measure of dispersion among the resampled first error-mitigated target estimator values.

6. Method according to claim 4, wherein inferring the final error-mitigated target estimator value comprises:
defining a fitting model for a data set which comprises for each pair of resampled sets a tuple of the associated resampled value of the normalized measure of dispersion and the associated resampled first error-mitigated target estimator value, fitting the fitting model to the data set and estimating the resampled first error-mitigated target estimator value for a value of zero for the normalized measure of dispersion according to the fitting model to thereby infer the final error-mitigated target estimator value.

7. Method according to claim 6, wherein defining the fitting model comprises defining a parameter-dependent weighted regression model with parameter-dependent weights assigned to the resampled first error-mitigated target estimator values,

and the method further comprises for each parameter value of a plurality of parameter values fitting the weighted regression model with the parameter value to the data set, estimating an associated resampled first error-mitigated target estimator value for a value of zero for the resampled normalized measure of dispersion according to the fitted weighted regression model with the parameter value to thereby obtain a second error-mitigated target estimator value, calculating a value of a statistical error of the second error-mitigated target estimator value associated with the parameter value and inferring the final error-mitigated target estimator value on the basis of the second error-mitigated target estimator values and the values of the statistical error.

8. Method according to claim 7, wherein the final error-mitigated target estimator value is inferred as the second error-mitigated target estimator value with the smallest value of the statistical error.

9. Method according to anyone of the preceding claims, wherein

the noise-reduced target estimator value is derived in the noise-reduction step such that in the zero-noise limit the noise-reduced target estimator value is equal to the target estimator value, and wherein
inferring the first target estimator value in the inference step comprises estimating the zero-noise limit of the noise-reduced target estimator value with the optimal control parameter value.

10. Method according to anyone of the preceding claims, wherein

deriving the first contribution of the noise-reduced target estimator value for each target noise strength value comprises assigning one auxiliary noise strength value to the target estimator value and dividing the target estimator value associated with the target noise strength value by the auxiliary estimator value associated with the assigned auxiliary noise strength value and by multiplying the result with the noise-free auxiliary value, and wherein the parameter-dependent model for the remaining noise-dependency of the first contribution comprises a term which is a product of the control parameter and a noise-cancelling function in the noise strength which depends on the auxiliary estimator values and the noise-free auxiliary value and has a noise-dependency which is reduced compared to the noise-dependency of the auxiliary estimator values.

11. Method according to anyone of the preceding claims, wherein

the minimization criterion is fulfilled when a zero-noise limit of a K-th Taylor polynomial of the noise-reduced target estimator value in the noise strength about an expansion value selected among the plurality of target noise strength values, wherein derivatives are replaced by difference quotients which are expressed in terms of the noise-reduced target estimator values, is equal to the noise-reduced target estimator value associated with the expansion value, wherein
inferring the first error mitigated target estimator value in the inference step is on the basis of the noise-reduced target estimator value associated with the expansion value and obtained for the optimal control parameter value, and wherein
preferably the target noise strength values increase with the noise level, and the expansion value is the smallest target noise strength value of the plurality of target noise strength values.

12. Method according to anyone of the preceding claims, wherein
the method comprises determining the noise-free auxiliary value wherein the determining comprises a classical simulation of the auxiliary quantum circuit at zero noise on a classical computer (10).

13. Method according to anyone of the preceding claims, wherein
the target and auxiliary quantum circuits are error-corrected quantum circuits according to a quantum error correction code, and the execution of the target and auxiliary quantum circuits at the plurality of different noise levels comprises their execution for a plurality of different code distances of the quantum error correction code.

14. Method according to the preceding claim, wherein
the execution of the target and auxiliary quantum circuits at the plurality of different noise levels comprises one of the following such as unitary folding on physical or logical qubits, local gate folding, noise amplification via pulse level control or probabilistic noise-amplification.

**15.** Method according to anyone of the preceding claims, wherein
the method further comprises executing the target and/or auxiliary quantum circuits by the quantum processor (1) at each of the plurality of target and/or auxiliary noise levels to thereby obtain the target and/or auxiliary measurement data, respectively, and evaluating the target and/or auxiliary measurement data by the classical computer (10) to thereby determine the target and/or auxiliary estimator values, respectively.

**16.** Computer program product comprising instructions which, when the computer program product is executed by a classical computer (10), cause the classical computer (10) to carry out the method according to anyone of claims 1-14.

**17.** Computing system (20) comprising a classical computer (10) and a quantum processor (1), wherein

the quantum processor (1) is configured to execute the target and auxiliary quantum circuits at each of the plurality of target and auxiliary noise levels to thereby obtain the target and auxiliary measurement data, respectively, wherein the classical computer (10) is configured to evaluate the target and auxiliary measurement data to thereby determine the target and auxiliary estimator values, respectively, and
wherein the classical computer (10) is further configured to execute the computer program product according to claim 16.

Fig. 1

S1

**Data step**
Receive target and auxiliary sets and noise-free auxiliary value

S2

**Noise-reduction step**
Derive for each noise strength value $\lambda_m$
a control parameter dependent noise-reduced target estimator value which is linear in the control parameter

S3

**Control parameter step**
Select an expansion value $\lambda_{m_e}$ among the plurality of noise-strenght values and
determine the value of the optimal control parameter $n_{op}$, such that
in the zero-noise limit a K-th Taylor polynomial of the noise-reduced target estimator value about $\lambda_{m_e}$
is equal to
the noise-reduced target estimator value associated with $\lambda_{m_e}$

S4

**Inference step**
Determine the first error-mitigated target estimator value as the noise-reduced target estimator value for the optimal control parameter value and the expansion value

**Fig. 2**

S5

Calculate a value $D_N$ of a normalized measure of dispersion for the noise-reduced target estimator values

S6

$$D_N < \Delta_{N,thresh}$$

NO

S7a

YES

Determine the final error-mitigated target estimator value as the first target estimator value

S7b

Receive an auxiliary set for a different auxiliary circuit and repeat steps S1-S6

**Fig. 3**

S11

**Data step**
Receive target and auxiliary measurement data
for each noise strength value and receive noise-free
auxiliary value

S12

**Resampling step**
Resample over the target and auxiliary measurement data
to determine for each noise strength value a plurality of $R$
resampled target and auxiliary estimator values
$\{E^{cl}(\lambda_m, T, r), E^{cl}(\lambda_m, A, r)\}_{r=1,...,R}$ respectively, and
determine $R$ resampled pairs of target and auxiliary sets
$\{E^{cl}(\lambda_m, T, r)\}_{m=1}^{M}, \{E^{cl}(\lambda_m, A, r)\}_{m=1}^{M}$, respectively

S13

**Evaluation step**
Implement steps S2-S5 for each resampled pair of target
and auxiliary sets to thereby obtain $R$ resampled pairs of
first resampled traget estimator values $E_1^{cl}(r)$ and
associated resampled values of the normalized measure
of dispersion $D_N^{cl}(r)$

**Fig. 4**

S14a

**Selection step**
Identify the first resampled target estimator value $E_1^{cl}(\tilde{r})$ with smallest value of the normalized measure of dispersion among the resampled pairs

S15a

**Inference step**
Determine the final error-mitigated target estimator value as the identified resampled target estimator value $E_1^{cl}(\tilde{r})$

**Fig. 4a**

S14b

**Preparation step**
Define a data set of tuples of the first resampled error-mitigated target estimator values and the associated resampled values of the normalized measure of dispersion
$$(E_1^{cl}(r), D_N^{cl}(r))$$

S15b

**Extrapolation step**
Apply a linear fit to the data set and extrapolate to a limit of a zero value for the normalized measure of dispersion to thereby determine an extrapolated value for the first error-mitigated target estimator value associated with a zero value of the normalized measure of dispersion

S16b

**Inference step**
Determine the final error-mitigated target estimator values as the extrapolated value for the first error-mitigated target estimator value

**Fig. 4b**

**Preparation step**

Define a data set of tuples of the first resampled error-mitigated target estimator values and the associated resampled values of the normalized measure of dispersion $(E_1^{cl}(r), D_N^{cl}(r))$

S14c

**Modelling step**

Define first and second parameter-dependent weighted linear regression models with first and second parameter dependent weights $1/D_N^{cl}(r)^\alpha$ and $e^{-D_N^{cl}(r)/\alpha}$ assigned to $E_1^{cl}(r)$, respectively, wherein $\alpha \in \{\alpha_k\}_{k=1}^K$

S15c

**Set k=1**

S16c

**Fitting step**

Fit first and second parameter-dependent weighted linear regression models with parameter value $\alpha_k$ to data set

S17c

**Extrapolation step**

Extrapolate first and second parameter-dependent weighted linear regression models with parameter $\alpha_k$ to value of zero for normalized measure of dispersion to thereby obtain second error-mitigated target estimator values $E_2^{cl,(1,2)}(\alpha_k)$ and calculate value $D^{(1,2)}(\alpha_k)$ of a statistical error of $E_2^{cl,(1,2)}(\alpha_k)$

S18c

**Set k=k+1**

S19c

**YES**

$k \leq K$

S20c

**NO**

**Inference step**

Infer final error-mitigated target estimator value as second error-mitigated target estimator value $E_2^{cl,(1,2)}(\alpha_{\tilde{k}})$ with smallest value $D^{(1,2)}(\alpha_{\tilde{k}})$

**Fig. 4c**

S21c

Fig. 5a

Fig. 6a

EP 4 764 979 A1

Fig. 5b

# Fig. 5c

EP 4 764 979 A1

Fig. 5d

Fig. 6b

Fig. 6c

EP 4 764 979 A1

## Fig. 6d

Fig. 7(a) – (j)

**Fig. 7k**

**Fig. 7(l)**

**Fig. 7(m)**

EP 4 764 979 A1

# EUROPEAN SEARCH REPORT

**Application Number**

EP 25 22 3065

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2024/240324 A1 (IQM FINLAND OY [FI]) 28 November 2024 (2024-11-28) * abstract; figures 1-2, 4a-c, 5a-c * * page 1 - page 10 * * page 12 - page 20 * ----- | 1-17 | INV. G06N10/70 G06N10/20 |
| A | MISTY A WAHL ET AL: "Zero noise extrapolation on logical qubits by scaling the error correction code distance", ARXIV.ORG, CORNELL UNIVERSITY LIBRARY, 201 OLIN LIBRARY CORNELL UNIVERSITY ITHACA, NY 14853, 25 July 2023 (2023-07-25), XP091572321, * the whole document * ----- | 1-17 | |
| A | WO 2023/181019 A1 (YISSUM RES DEV CO OF HEBREW UNIV JERUSALEM LTD [IL]) 28 September 2023 (2023-09-28) * the whole document * ----- | 1-17 | |
| X,P | AMIN HOSSEINKHANI ET AL: "Noise-Robust Estimation of Quantum Observables in Noisy Hardware", ARXIV.ORG, CORNELL UNIVERSITY LIBRARY, 201 OLIN LIBRARY CORNELL UNIVERSITY ITHACA, NY 14853, 9 March 2025 (2025-03-09), XP091952297, * page 1 - page 13 * ----- | 1-17 | **TECHNICAL FIELDS SEARCHED (IPC)** G06N |

The present search report has been drawn up for all claims

| Place of search | Date of completion of the search | Examiner |
|---|---|---|
| The Hague | 14 April 2026 | Cilia, Elisa |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

...............................................................................................

& : member of the same patent family, corresponding document

EPO FORM 1503 03.82 (P4C01)

## ANNEX TO THE EUROPEAN SEARCH REPORT
## ON EUROPEAN PATENT APPLICATION NO.

EP 25 22 3065

This annex lists the patent family members relating to the patent documents cited in the above-mentioned European search report.
The members are as contained in the European Patent Office EDP file on
The European Patent Office is in no way liable for these particulars which are merely given for the purpose of information.

14-04-2026

| Patent document cited in search report | Publication date | Patent family member(s) | | Publication date |
|---|---|---|---|---|
| WO 2024240324 A1 | 28-11-2024 | EP | 4713846 A1 | 25-03-2026 |
| | | WO | 2024240324 A1 | 28-11-2024 |
| WO 2023181019 A1 | 28-09-2023 | US | 2025209366 A1 | 26-06-2025 |
| | | WO | 2023181019 A1 | 28-09-2023 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **S. ENDO**. Hybrid quantum-classical algorithms and quantum error mitigation. *Journal of the Physical Society of Japan*, 2021, vol. 90, 032001
- **Z. CAI**. *Quantum error mitigation*, 2023
- **Y. QUEK**. *Exponentially tighter bounds on limitations of quantum error mitigation*, 2023
- **K. TEMME**. Error mitigation for short-depth quantum circuits. *Phys. Rev. Lett.*, 2017, vol. 119, 180509
- **S. ENDO**. Practical quantum error mitigation for near-future applications. *Phys. Rev.*, 2018, vol. X8, 031027
- **C. SONG**. Quantum computation with universal error mitigation on a superconducting quantum processor. *Science Advances*, 2019, vol. 5, eaaw5686
- **E. VAN DEN BERG**. Probabilistic error cancellation with sparse Pauli-Lindblad models on noisy quantum processors. *Nature Physics*, 2023, vol. 19, 1116-1121
- **K. TEMME**. *Phys. Rev. Lett.*, 2017, vol. 119, 180509
- **Y. LI**. Efficient variational quantum simulator incorporating active error minimization. *Phys. Rev.*, 2017, vol. X 7, 021050
- **K. TEMME**. *Phys. Rev. Lett.*, vol. 119, 180509
- **Y. LI et al.** *Phys. Rev.*, vol. X 7, 021050
- **M. KREBSBACH**. Optimization of Richardson extrapolation for quantum error mitigation. *Phys. Rev. A*, vol. 106, 062436
- **S. ENDO**. *Phys. Rev.*, vol. X8, 031027
- **Y. KIM**. Evidence for the utility of quantum computing before fault tolerance. *Nature*, 2023, vol. 618, 500-505
- **Y. KIM**. *Nature*, 618
- **Z. CAI**. Multi-exponential error extrapolation and combining error mitigation techniques for NISQ applications. *npj Quantum Information*, 2021, vol. 7, 80
- **K. TEMME et al.** *Phys. Rev. Lett*, vol. 119
- **A. KANDALA**. Error mitigation extends the computational reach of a noisy quantum processor. *Nature*, 2019, vol. 567, 491-495
- Digital zero noise extrapolation for quantum error mitigation. **T. GIURGICA-TIRON**. 2020 IEEE International Conference on Quantum Computing and Engineering (QCE). IEEE, 2020
- **E.F. DUMITRESCU**. Cloud quantum computing of an atomic nucleus. *Phys. Rev. Lett.*, 2018, vol. 120, 210501
- **A. HE**. Zero-noise extrapolation for quantum-gate error mitigation with identity insertions. *Phys. Rev. A*, 2020, vol. 102, 012426
- **K. SCHULTZ**. Impact of time-correlated noise on zero-noise extrapolation. *Phys. Rev. A*, 2022, vol. 106, 052406
- **K. F. KOENIG**. *Inverted-circuit zero-noise extrapolation for quantum gate error mitigation*, 2024
- **S. FERRACIN**. *Efficiently improving the performance of noisy quantum computers*, 2022
- **L. HOUR**. *Improving zero-noise extrapolation for quantum-gate error mitigation using a noise-aware folding method*, 2024
- **M. URBANEK et al.** Mitigating depolarizing noise on a quantum computer with noise-estimation circuits. *Phys. Rev. Lett.*, 2021, vol. 127, 270502
- **P. CZARNIK**. Error mitigation with Clifford quantum-circuit data. *Quantum*, 2021, vol. 5, 592
- **A. LOWE**. Unified approach to data-driven quantum error mitigation. *Phys. Rev. Res.*, 2021, vol. 3, 033098
- **D. MOORE et al.** *Introduction to the practice of statistics*
- **T. GIURGICA-TIRON**. 2020 IEEE International Conference on Quantum Computing and Engineering (QCE. IEEE, 2020
- **Y. KIM**. *Nature*, 2023, vol. 618, 500
- **P.D. NATION et al.** Scalable mitigation of measurement errors on quantum computers. *PRX Quantum*, 2021, vol. 2, 040326
- **A. HASHIM et al.** Randomized compiling for scalable quantum computing on a noisy superconducting quantum processor. *Physical Review X*, 2021, vol. 11, 041039
- **A. HOSSEINKHANI et al.** *Noise-robus estimation of Quantum Observables in Noisy Hardware*
- **M. URBANEK**. *Phys. Rev. Lett.*, 2021, vol. 127, 270502